# FASCICULE DE BREVET EUROPEEN

(11) **EP 1 313 973 B1**
(45) Date de publication et mention de la délivrance du brevet: **21.05.2008**
(21) Numéro de dépôt: 01965355.9
(22) Date de dépôt: 27.08.2001
(51) Int. Cl.: F16K 11/02, F16K 15/14, B01L 3/00

(54) **CARTE REACTIONNELLE ET UTILISATION D'UNE TELLE CARTE**
TESTKARTE FÜR ANALYSEN SOWIE DEREN VERWENDUNG
REACTION CARD AND USE OF SAME

(30) Priorité: 28.08.2000 FR 0010978
(43) Date de publication de la demande: 28.05.2003
(73) Titulaire: Biomerieux S.A., 69280 Marcy l'Etoile (FR)
(72) Inventeur: COLIN, Bruno, F-69280 Marcy l'Etoile (FR); PARIS, Cécile, F-69280 Marcy L'Etoile (FR); LIMON, Bernard, F-01250 Rignat (FR); BROYER, Patrick, F-01700 Beynost (FR); ROGERS, Charles, Halifax, MA 02338 (US)
(74) Mandataire: de Zeeuw, Johan Diederick
(86) Numéro de dépôt international: PCT/FR2001/002671
(87) Numéro de publication internationale: WO 2002/018823

(56) Documents cités:
- WO-A-00/13795
- WO-A-97/27324
- WO-A-98/49344
- FR-A- 2 762 092
- FR-A- 2 795 476
- US-A- 5 726 026
- US-A- 5 856 174
- US-A- 6 074 827

## Description

La présente invention concerne une carte réactionnelle pour mener à bien des réactions chimiques et/ou biologiques. Elle concerne également l'utilisation d'une telle carte pour purifier et amplifier des acides nucléiques et les détecter.

L'état de la technique est constitué par le document US-A-4,585,623 qui a pour objet un appareil pour réaliser rapidement à un endroit unique des essais chimiques ou immunochimiques. Cet appareil comporte un corps en plastique moulé pouvant être miniaturisé, et présentant plusieurs tubes contenant des réactifs, un tube contenant l'échantillon et un tube de plus petite taille recevant la réaction. Chaque tube étant associé à un piston, il est possible d'insérer l'appareil dans un automate programmable.

Cet appareil est relativement volumineux même si la miniaturisation est possible, car il faut prévoir la position dudit appareil ainsi que des différentes bielles qui vont permettre d'actionner les pistons. De plus, il n'est possible d'effectuer qu'une seule réaction avec un tel appareil, si plusieurs réactions doivent être réalisées, il faudra prévoir plusieurs appareils et également du temps pour charger ceux-ci avec les réactifs et échantillons adéquats.

Le document WO A-97/27324 concerne une cassette pour conduire en parallèle plusieurs réactions qui comporte une ouverture d'entrée et une ouverture de sortie pour le transfert du ou des échantillons à introduire dans la cassette. Certaines zones de la cassette sont de construction particulière (chambre de Bursapak, soupape à piston, valve à bille), elles permettent, sous l'action d'une force intérieure ou extérieure continue, de maintenir un canal ouvert ou fermé. Les chambres de Bursapak sont parfois associées à des filtres hydrophobes qui permettent de bloquer la progression d'un liquide.

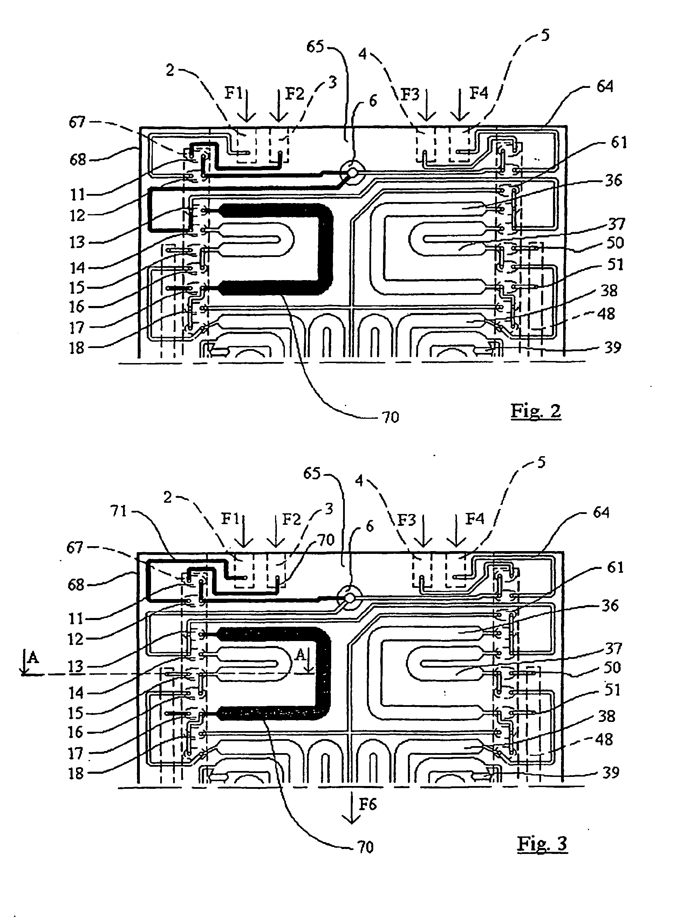

Toutefois, cette construction comporte un inconvénient majeur qui réside dans la structure des vannes des chambres de Bursapak. Celles-ci comportent toutes des films qui doivent être préformés préalablement à leur montage sur la carte réactionnelle. Ce préformage permet de maintenir chaque chambre de Bursapak fermée en position de repos (figures 2A et 2B). L'ouverture de cette chambre est possible sous une action intérieure (figure 2C), comme par exemple une augmentation de la pression d'un fluide contenu dans la carte réactionnelle, ou sous une action extérieure (figures 2D et 2E), comme par exemple une augmentation de la pression due à la pression d'un piston ou autres contre le film préformé. Ce préformage de chaque film doit donc être réalisé, avant sa mise en place sur ladite carte réactionnelle. Le coût de fabrication, de stockage et de transport de tels films est nettement plus important que pour des films qui restent plans. De plus, ceci ne facilite pas non plus la fabrication, le stockage et le transport des cartes réactionnelles ainsi équipées. Enfin, les formes convexes de ces films peuvent être plus aisément endommagées, ce qui peut entraîner des fuites ou des erreurs dans l'utilisation ultérieure desdites cartes.

*Le document* WO-A-97/02357 *décrit un appareil de diagnostic d'acides nucléiques qui s'apparente à la cassette précédente, au niveau de la complexité. Ainsi la figure 2b présente une valve constituée par de très nombreux composants.*

Cet appareil a donc sensiblement les même inconvénients que WO-A-97/27324.

La demande de brevet WO-A-99/33559 propose une cartouche ou carte de séparation d'un constituant particulier, tel que des acides nucléiques, présent dans un échantillon. Pour cela, elle comporte un certain nombre de compartiments et de canaux. Ces compartiments contiennent dès le départ l'ensemble des liquides (liquide d'élution, liquide de lavage par exemple) qui va être utilisé. Le contrôle des mouvements de fluides est réalisé par des vannes disposées non régulièrement au sein de la carte, et par des capteurs de la présence de fluides. Ces vannes fonctionnent comme des diodes fluidiques, qui laissent un liquide s'écouler dans un sens mais pas dans le sens opposé. Elles utilisent pour cela des disques magnétiques qui peuvent être déplacés depuis l'extérieur. Les capteurs sont reliés électriquement vers l'extérieur ou à un microprocesseur interne à la carte.

Ce type de carte est particulièrement complexe puisque le corps de cette carte est en fait constitué d'un sandwich de plusieurs éléments superposés, voir à ce propos les diodes fluidiques. De plus il convient d'assurer l'étanchéité entre ces divers éléments superposés. La carte incorpore en plus des capteurs, des fils électriques, des diodes fluidiques, fonctionnant avec des aimants, et même un microprocesseur. Le coût de fabrication est donc prohibitif, et tous ces constituants électriques, magnétiques peuvent avoir une influence sur le fonctionnement interne de ladite carte. Une telle carte n'est donc pas très adaptée à une technologie basée sur la micro-fluidique. La présence de liquides au sein de la carte nécessite un stockage limité dans le temps ou l'introduction de ces liquides par un manipulateur averti. La souplesse d'utilisation est donc assez limitée.

Conformément à la présente invention, il est proposé une carte réactionnelle qui répond à l'ensemble de ces problèmes. Une telle carte propose l'analyse biologique, d'un ou de plusieurs ligands, nécessitant pour leur détection et/ou leur quantification, l'utilisation d'un ou plusieurs anti-ligands. Un exemple d'application des techniques d'analyse concerne les immunoessais, quelque soit leur format, par analyse directe ou par compétition. Un autre exemple d'application concerne la détection et/ou la quantification d'acides nucléiques comprenant l'ensemble des opérations nécessaires à cette détection et/ou à cette quantification à partir d'un prélèvement quelconque contenant les acides nucléiques cibles. Parmi ces différentes opérations, on peut citer la lyse, la fluidification, la concentration, la purification, les étapes d'amplification enzymatique des acides nucléiques, les étapes de détection incorporant une étape d'hybridation utilisant par exemple une puce à ADN ou une sonde marquée. La demande de brevet WO-A-97/02357 ou la demande de brevet déposée par la demanderesse, sous le numéro FR99/00111, explicite différentes étapes nécessaires dans le cas d'acides nucléiques.

L'état de la technique le plus proche est décrit en WO 0013795, concernant une carte d'analyse adapté à une technologie basée sur la micro-fluidique qui fait état des caractéristiques suivantes de la revendication indépendante 1: la carte réactionnelle est constituée d'un corps, ayant une face avant et une face arrière délimitées par un rebord, d'au moins une entrée et d'au moins une sortie, reliées l'une à l'autre par un réseau de canaux constituant au moins une voie réactionnelle pour au moins un fluide, le ou les fluides étant dirigés au sein de la carte par l'intermédiaire de vannes ; la carte comporte des canaux affleurant sur au moins l'une de ses faces, les canaux étant de deux sections différentes, une petite section pour le transfert du fluide ou des fluides et une grande section faisant office de compartiment réactionnel.

La différence entre l'objet de la revendication indépendante 1 et l'état de la technique selon D1 réside en ce que: chaque vanne est constituée d'un film flexible, qui peut être déformé pour permettre le passage d'un fluide ou qui coopère avec un moyen de compression pour empêcher le passage du fluide, le film étant fixé sur la face arrière de ladite carte au niveau d'un renfoncement périphérique de l'ensemble des canaux concernés par la vanne; chaque face avant ou arrière est délimitée par au moins un film.

A cet effet, la présente invention concerne une carte réactionnelle selon les caractéristiques de la revendication 1.

Selon un mode particulier de réalisation, le corps de la carte est monobloc et le moyen de compression est rapporté et solidaire de ladite carte, ou constitue une partie d'un appareil permettant la mise en oeuvre de la carte.

Selon un mode particulier de réalisation, le rapport entre la petite section et la grande section des canaux est compris entre 1 pour 1,01 et 1 pour 10, préférentiellement entre 1 pour 1,01 et 1 pour 3.

Toujours selon un mode particulier de réalisation, les canaux affleurent en toute ou partie au niveau de la face avant de la carte et les vannes sont présentes au niveau de la face arrière de ladite carte.

Selon encore un mode particulier de réalisation, la face avant de la carte comporte un seul film au niveau de tous les canaux affleurant cette face, et la face arrière de ladite carte comporte :
- au moins un film flexible au niveau des vannes,
- au moins un filtre hydrophobe, et éventuellement
- au moins un film au niveau des canaux affleurant au niveau de la face arrière.

Selon un mode particulier de réalisation, le ou les films flexibles et le ou les films constituent un seul et même film.

Selon un autre mode particulier de réalisation, lorsque la carte est en forme sensiblement de parallélépipède, les canaux sont, en tout ou partie, circonscrits dans la partie médiane de la carte, les filtres d'arrêt, qui sont hydrophobes, sont circonscrits au niveau d'au moins un des côtés de ladite carte, et les vannes sont positionnées entre les canaux et les filtres d'arrêt.

Dans ce dernier mode de réalisation et préférentiellement, le rebord comporte l'ensemble des entrées et sorties de fluides de la carte.

Dans le cas où la carte est en forme sensiblement de parallélépipède, la ou les entrées sont présentes sur l'un des côtés constituant le rebord, alors que la ou les sorties sont présentes sur un autre côté de ce rebord.

Dans ce dernier cas et préférentiellement, la ou les entrées sont présentes sur un côté opposé au côté où sont présents la ou les sorties.

Dans le cas où la carte est en forme sensiblement de parallélépipède rectangle, la ou les entrées et la ou les sorties sont présentes sur les deux petits côtés constituant le rebord.

La présente invention concerne également l'utilisation d'une carte réactionnelle, telle que définie dans la revendication 12.

La présente invention concerne également l'utilisation d'une carte réactionnelle, telle que définie ci-dessus, pour tester une solution biologique, éventuellement traitée au préalable afin de libérer les acides nucléiques, on effectue les différentes étapes biologiques dans l'ordre suivant:
- capture des acides nucléiques,
- reprise des acides nucléiques capturés dans une solution d'élution,
- mélange des acides nucléiques repris avec les constituants structurels et fonctionnels permettant l'amplification de ces acides nucléiques, et
- détection qualitative et/ou quantitative des produits d'amplification.

Eventuellement, on effectue une dernière étape consistant à analyser ces ligands ou ces produits d'amplification, soit dans un nouvel emplacement au sein de la carte, soit après transmission vers un autre dispositif.Selon une variante particulière de l'utilisation, les ligands ou acides nucléiques capturés sont soumis à au moins un liquide de lavage préalablement à leur reprise.

Selon une autre variante d'utilisation, la capture et éventuellement le lavage sont effectués N fois successivement, N étant compris entre 1 et 10.

Selon encore une autre variante particulière de l'utilisation, on détecte un traitement des ligands ou une amplification des acides nucléiques préalablement à la transmission vers un compartiment de la carte ou vers un autre dispositif permettant d'analyser les ligands ou les amplicons.

Préférentiellement, pour toutes les variantes d'utilisation ci-dessus évoquées, la carte est utilisée après un appareil permettant de traiter une solution à tester, tel qu'un appareil pour lyser des cellules biologiques et libérer les ligands, tels que des acides nucléiques, et avant un appareil permettant d'analyser la présence de ces ligands, tel qu'une puce à ADN.

Structurellement, la carte selon l'invention s'insère entre deux appareils qui peuvent être constitués également par des cartes, l'une en amont qui effectue un pré-traitement de la solution à tester, l'autre en aval qui effectue un post-traitement de la solution à tester déjà traitée.

Les figures ci-jointes sont données à titre d'exemple explicatif et n'ont aucun caractère limitatif. Elles permettront de mieux comprendre l'invention.

La figure 1 représente une vue depuis la face avant d'une carte réactionnelle selon un premier mode de réalisation de la présente invention.

La figure 2 représente une vue identique mais partielle de la figure 1, lorsque le procédé d'utilisation de la carte est en cours de fonctionnement, ladite carte ayant reçu la solution à tester.

La figure 3 représente une vue identique à la figure 2, lorsque le procédé d'utilisation de la carte est en cours de fonctionnement, ladite carte ayant subi une purge permettant de doser précisément le volume de solution à tester.

La figure 4 représente une vue identique mais partielle de la figure 1, lorsque le procédé d'utilisation de la carte est en cours de fonctionnement, la solution à tester étant transférée du compartiment de dosage de la solution vers la partie amont du compartiment de séparation.

La figure 5 représente une vue identique aux figures 2 et 3, lorsque le procédé d'utilisation de la carte est en cours de fonctionnement, ladite carte ayant reçu le liquide d' élution.

La figure 6 représente une vue identique aux figures 2, 3 et 5, lorsque le procédé d'utilisation de la carte est en cours de fonctionnement, ladite carte ayant subi une purge permettant de doser précisément le volume de liquide d'élution.

La figure 7 représente une vue identique mais partielle de la figure 1, lorsque le procédé d'utilisation de la carte est en cours de fonctionnement, le liquide d'élution étant dans le compartiment de séparation et permettant la reprise des acides nucléiques.

La figure 8 représente une vue identique mais partielle de la figure 1, lorsque le procédé d'utilisation de la carte est en cours de fonctionnement, le liquide d'élution, qui contient les acides nucléiques, étant transféré dans le compartiment de reprise des constituants structurels permettant de réaliser une amplification.

La figure 9 représente une vue identique à la figure 8, le liquide d'élution, qui contient les acides nucléiques et les constituants structurels, étant transféré dans le compartiment de reprise des constituants fonctionnels permettant de réaliser une amplification.

La figure 10 représente une vue identique aux figures 8 et 9, le liquide d'élution, qui contient les acides nucléiques et les constituants structurels et fonctionnels, étant en partie transféré dans le compartiment d'échantillonnage en vue de l'étape représenté à la figure 12.

La figure 11 représente une vue identique aux figures 8 à 10, le liquide d'élution, qui contient les acides nucléiques et les constituants structurels et fonctionnels et qui n'a pas été transféré dans le compartiment d'échantillonnage, étant transféré dans le compartiment de convergence, en vue de sa sortie vers l'extérieur.

La figure 12 représente une vue identique aux figures 8 à 11, le liquide d'élution, qui est présent dans le compartiment d'échantillonnage, est transféré dans le compartiment de détection et de lecture.

La figure 13 représente une vue en coupe selon A-A de la figure 3.

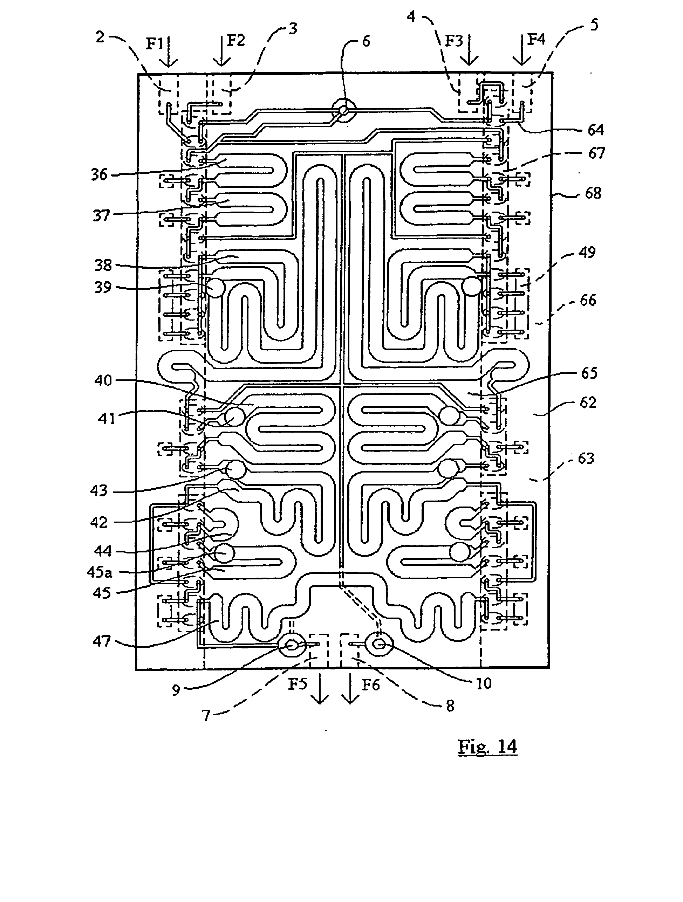

La figure 14 représente une vue depuis la face avant d'une carte réactionnelle selon un second mode de réalisation de la présente invention.

La figure 15 représente une vue en perspective de plusieurs vannes associées à la carte réactionnelle.

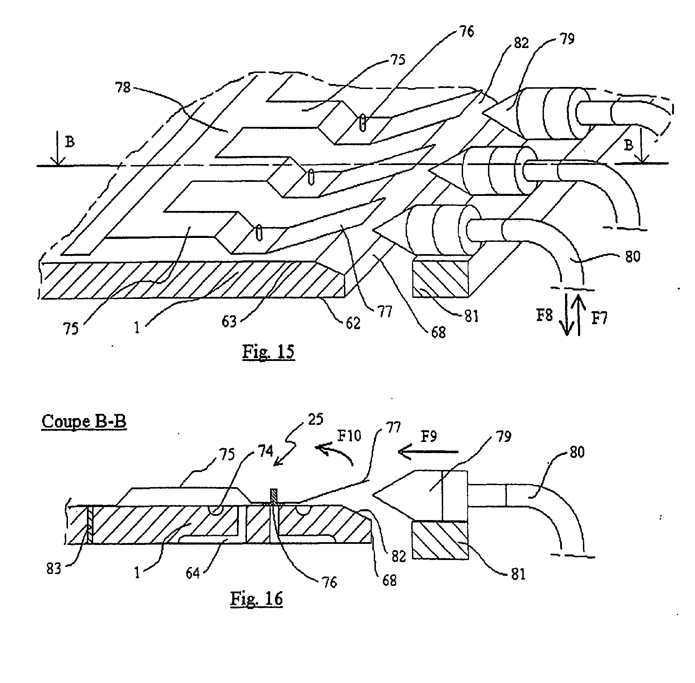

Enfin, la figure 16 représente une vue en coupe selon B-B de la figure 15.

### DEFINITIONS

Par ligand, on entend toute espèce biologique qui peut être de nature protéique ou acide nucléique, comme par exemple un antigène, un fragment d'antigène, un anticorps, un fragment d'anticorps, un haptène, un acide nucléique, un fragment d'acide nucléique, une hormone, une vitamine, un peptide ou un polypeptide.

Un exemple de pré-traitement, peut être constitué par une lyse cellulaire, telle que décrite dans les demandes de brevet de la demanderesse :
- FR99/04289, déposée le 1er avril 1999, sur la lyse par sonication,
- PCT/FR99/01309, déposée sous priorité du 23 juillet 1998, sur la lyse mixte magnétique et mécanique,
- PCT/FR99/00830, déposée sous priorité du 10 avril 1998, sur la lyse électrique, et
- PCT/IB98/01475, déposée sous priorité du 23 septembre 1997, sur la lyse mécanique.

Un exemple de post-traitement, peut être constitué par une détection au moyen d'une biopuce. Par biopuce, on entend tout support solide sur lequel sont fixés des ligands, et en particulier par une puce à ADN, on entend tout support solide sur lequel sont fixés des acide nucléiques. La méthode de fixation des ligands peut être réalisée de différentes manières et notamment par adsorption ou covalence comme par exemple la synthèse in situ par les techniques de photolithographie ou par un système piézoélectrique, par dépôt capillaire de ligands préformés. A titre d'illustration, des exemples de ces biopuces appliqués aux puces à ADN sont donnés dans les publications de G. Ramsay, Nature Biotechnology, 16, p40-44, 1998; F. Ginot, Human Mutation, 10, p1-10, 1997 ; J. Cheng et al, Molecular diagnosis, 1(3), p183-200, 1996 ; T. Livache et al, Nucleic Acids Research, 22(15), p2915-2921, 1994 ; J. Cheng et al, Nature Biotechnology, 16, p541-546, 1998 ou dans les brevets US 4981783 (Augenlicht), US 5700637 (Southern), US 5445934 (Fodor), US 5744305 (Fodor), US 5807522 (Brown).

A constituants structurels permettant l'amplification quand ils sont associés aux constituants fonctionnels définis ci-après, il convient de donner la définition suivante : des nucléotides (désoxyribonucléotides dNTP et/ou ribonucléotides NTP), au moins une paire d'amorces qui encadrent des régions spécifiques que l'on souhaite amplifier, des ions (par exemple MgCl₂, KCl) et un tampon (tel que le Tris).

Les constituants fonctionnels sont formés d'au moins une enzyme, préférentiellement de deux ou trois enzymes, en présence d'un tampon, tel que du Tris à pH 7,5, de sels et d'ions permettant la réaction d'amplification quand ils sont associés aux constituants structurels définis ci-dessus.

Par amplicons, il faut comprendre des produits d'une réaction d'amplification enzymatique.

### DESCRIPTION DE LA CARTE REACTIONNELLE :

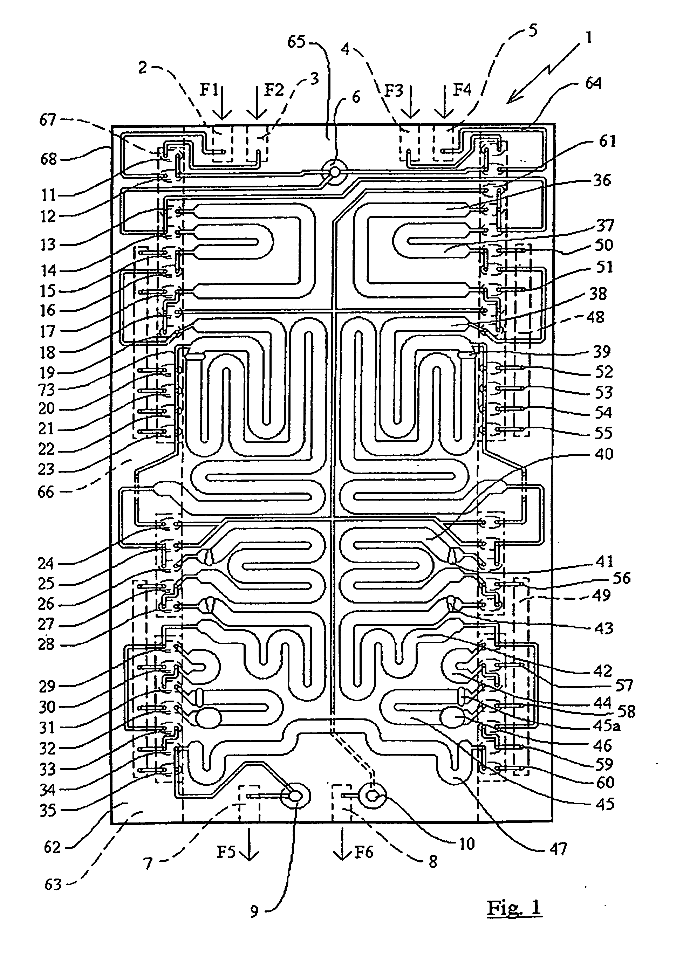

La présente invention concerne une carte réactionnelle 1 représentée dans un premier mode de réalisation sur la figure 1. Cette carte réactionnelle 1 est constituée d'un parallélépipède rectangle comportant une face avant 62 et une face arrière 63 reliées l'une à l'autre, par un rebord, également appelé tranche 68. Sur cette figure est donc représenté en traits pleins, l'ensemble des éléments qui constitue la face avant 62. On remarque entre autre, un certain nombre de canaux 64 qui sont débouchants au niveau de cette face 62. Ces canaux 64 sont cloisonnés par l'intermédiaire d'un film transparent 65, collé sur ladite face avant 62. Néanmoins, il n'est pas obligatoire que ce film 65, comme ceux qui seront décrits ci-dessous, soit transparent, il pourrait être opaque translucide, etc. La nature transparente permet néanmoins de mieux visualiser éventuellement la position d'une solution biologique à tester 69, ou tout autre solution 70, 71 ou 72, introduite dans la carte 1. La face arrière 63 comporte également un film transparent référencé 66 qui cloisonne les canaux 64, qui par endroit se trouvent affleurants au niveau de cette face arrière 63. Ces films 65 et 66 sont constitués de films BOPP (Biaxially Oriented PolyPropylen) ou autres films de même nature, qui sont soudés ou collés sur le corps de la carte 1, ce corps étant inerte par rapport aux solutions 69 à 72 transférées et aux réactions qu'ils subissent.

Ce film 66 peut être présent sur toute la surface de la carte 1, ou sur certaines portions de ladite carte 1. Néanmoins, ce film 66 peut être constitué par une paroi réalisée dans la même matière que le reste du corps de la carte 1.

On remarque également que la face arrière 63 est équipée d'un certain nombre de vannes, référencées 11 à 35 et également 61 sur la figure ; ces vannes 11 à 35 et 61 correspondent aux vannes décrites dans la demande de brevet FR99/08116 déposée le 22 juin 1999 au nom de la demanderesse. A l'instar de ce document, l'ensemble des vannes 11 à 35 et 61 est délimité par rapport à l'extérieur de la face arrière 63 par un film transparent 67. Celui-ci est d'une nature suffisamment souple pour permettre le passage d'une solution à tester 69, d'une solution traitée 70, d'un liquide de lavage 71, d'un liquide d'élution 72, etc. Il peut être constitué d'une membrane de silicone ou d'un film complexe PE / PET (PolyEthylen / PolyEthylen Tetraphtalate).

Il convient de signaler que les films transparents 66 et 67 situés au niveau de la face arrière 63, peuvent être constitués d'un seul et même film transparent. Ceci permettant de faciliter la fabrication de la carte 1. De plus, le film transparent 65 situé au niveau de la face avant 62, et les films transparents 66 et 67 situés au niveau de la face arrière 63, peuvent être constitués d'un seul et même film transparent, ce qui facilite encore plus la fabrication d'une telle carte 1 ainsi équipée.

Sur cette face arrière 63, on remarque également la présence de plusieurs filtres hydrophobes 48 et 49 dont le rôle sera exposé plus loin. En fait, il y a, dans ce mode de réalisation de la carte de la figure 1, deux voies parallèles. Une voie gauche et une voie droite qui permettent d'effectuer le même procédé. Néanmoins il est tout à fait possible de n'avoir qu'une seule voie ou une pluralité, c'est-à-dire supérieure à deux, selon le nombre de réactions que l'on souhaite effectuer.

On remarque enfin sur le pourtour de la carte 1, et plus précisément sur les deux cotés de petites dimensions, des entrées et sorties sont présentes, qui sont bien séparées les unes des autres. Ainsi en partie supérieure de cette figure 1, sont représentées quatre entrées qui correspondent à quatre fonctions bien définies. Ainsi, si on énumère les fonctions d'entrées de la gauche vers la droite, on note la présence d'une entrée 2 du liquide de lavage 71, d'une entrée 3 de la solution à tester 69, d'une entrée 4 du liquide d'élution 72, et enfin d'une entrée pour la variation de pression 5 à l'intérieur de ladite carte 1. L'ensemble de ces entrées 2 à 5 est relié à une vanne à bille d'entrée 6 par l'intermédiaire d'un certain nombre de canaux 64 ainsi que des première et deuxième vannes 11 et 12.

A l'opposé, l'autre coté de la carte 1 comporte deux sorties 7 et 8. La première sortie, dite sortie 7 de la solution traitée 70, est une sortie qui permet l'évacuation d'une quantité prédéterminée de la solution traitée 70 vers l'extérieur en vue d'une analyse ultérieure ou de tout autre traitement ultérieur. La seconde sortie est une sortie pour l'ensemble des déchets biologiques et liquides issus du fonctionnement de la carte 1. La sortie 7 est associée à une vanne à bille de sortie vers l'extérieur 9 alors que la sortie des déchets est associée à une vanne à bille de sortie des déchets 10.

Outre les deux parties, entrées 2 à 5 en position supérieure et sorties 7 et 8 en position inférieure, on remarque également un certain nombre de canaux, vannes et compartiments entre ces deux parties extrêmes. Comme cela a déjà été signalé, on note également la présence de deux voies séparées identiques à gauche et à droite de la figure 1. Le premier compartiment en position supérieure et en forme de C inversé sur la voie de gauche et en forme de C sur la voie de droite, il est de grande taille et constitue un compartiment de dosage de la solution 36. Ce compartiment 36 enserre en son sein un compartiment de dosage de liquide d'élution 37, compartiment 37 qui est de forme semblable mais d'un volume différent. En fait le rapport existant entre le volume du compartiment de dosage de la solution 36 et le volume de compartiment de dosage de liquide d'élution 37 est compris entre 1 pour 1 à 10 pour 1, préférentiellement entre 1,5 pour 1 à 4 pour 1 et encore plus préférentiellement de 2 pour 1.

En position sous-jacente est présent un compartiment de séparation 38, qui permet la reprise d'entités de capture, telles que des particules magnétiques, éventuellement revêtues d'oligonucléotides de capture, par adsorption ou covalence (voir à ce sujet les brevets US-A-4,672,040 et 5,750,338), et ainsi, après mélange, la sélection par séparation des acides nucléiques que l'on souhaite amplifier ultérieurement. Les particules magnétiques se retrouvent au sein de ce compartiment de séparation 38 sous la forme d'une pastille de particules magnétiques 39. Un mode de réalisation particulièrement intéressant de ces particules magnétiques est décrit dans les demandes de brevet déposées par la demanderesse sous les références suivantes :
- PCT/FR97/00912 sous priorité française du 24 mai 1996, et
- PCT/FR99/00011 sous priorité française du 6 janvier 1998.

Dans la dernière de ces demandes de brevet, il s'agit de particules magnétiques thermosensibles ayant chacune un noyau magnétique recouvert d'une couche intermédiaire. La couche intermédiaire est elle-même recouverte par une couche externe à base d'un polymère susceptible d'interagir avec au moins une molécule biologique, le polymère externe est thermosensible et présente une température critique inférieure de solubilité (LCST) prédéterminée comprise entre 10 et 100°C et de préférence entre 20 et 60°C. Cette couche externe est synthétisée à partir de monomères cationiques, qui génèrent un polymère ayant la capacité de lier les acides nucléiques. Cette couche intermédiaire isole les charges magnétiques du noyau, afin d'éviter les problèmes d'inhibition des techniques d'amplification de ces acides nucléiques. Des particules magnétiques sous forme de pastilles ont déjà été décrites dans l'état de la technique, constitué par le document EP-A-0.811.694, par exemple. La fabrication des pastilles en général est également bien décrite dans l'état de la technique, par exemple US-A-4,678,812 et US-A-5,275,016. Cette fabrication évoquée ci-dessus pourra être utilisée pour la synthèse des autres pastilles qui seront exposées par la suite.

En position sous-jacente, est présent un compartiment de reprise des constituants structurels permettant ultérieurement l'amplification. Ce compartiment 40 contient lui aussi une pastille 41 qui comporte des constituants qui permettront l'amplification ultérieure. Des constituants sous forme de pastilles, pour réaliser une amplification, ont déjà été décrits dans l'état de la technique. Il est possible de trouver des informations dans les documents suivants : le brevet US-A-5,098,893 ou l'article « Ambiant-temperature-stable molecular biology reagents » R. Ramanujam et al., Product Application Focus, Vol. 14, No. 3 (1993), 470-473, par exemple.

Encore en position sous-jacente est présent un compartiment d'amplification 42 qui comporte une pastille 43 contenant des constituants fonctionnels, tels que des enzymes qui, associés avec les constituants structurels précédemment cités, vont permettre réellement la conduite d'une amplification. Des enzymes sous forme de pastilles, pour réaliser une amplification, ont déjà été décrites dans l'état de la technique. Il est possible de trouver des informations dans les documents suivants : le brevet US-A-4,891,319, WO-A-87/00196, WO-A-95/33488 ou l'article « Extraordinary stability of enzymes dried in trehalose : simplified molecular biology » de C. Colaço et al., Bio/Technology, Vol. 10, September 1992, 1007-1011.

Toutes les techniques d'amplification peuvent être utilisées. Ainsi, pour l'amplification des acides nucléiques, il existe entre autres les techniques suivantes :
- PCR (Polymerase Chain Reaction), telle que décrite dans les brevets US-A-4,683,195, US-A-4,683,202 et US-A-4,800,159,
- LCR (Ligase Chain Reaction), exposée par exemple dans la demande de brevet EP-A-0.201.184,
- RCR (Repair Chain Reaction), décrite dans la demande de brevet WO-A-90/01069,
- 3SR (Self Sustained Sequence Replication) avec la demande de brevet WO-A-90/06995,
- NASBA (Nucleic Acid Sequence-Based Amplification) avec la demande de brevet WO-A-91/02818,
- SPSR (Single Primer Sequence Replication) avec le brevet US-A-5,194,370, et
- TMA (Transcription Mediated Amplification) avec le brevet US-A-5,399,491.

Il est toutefois possible d'effectuer d'autres étapes dans le compartiment 42 ci-dessus. Par exemple, ces amorces peuvent éventuellement contenir un marqueur fluorescent permettant la détection ultérieure des produits d'amplification, sans avoir à effectuer une étape supplémentaire pour le marquage. Ainsi, de telles amorces sont décrites dans l'article de D. Whitcombe et al., « Detection of PCR products using self-probing amplicons and fluorescence », Nature Biotechnology (17) 1999, 804 et suivantes, ou dans les demandes de brevet GB-A-2.338.301, WO-A-99/29905 et WO-A-99/60157.

En dessous du compartiment d'amplification 42, est présent un compartiment d'échantillonnage 44 qui va permettre de séparer en deux, le volume de la solution traitée 70 présent dans ledit compartiment d'amplification 42. Ce compartiment d'échantillonnage 44 est en fait destiné à recevoir une quantité prédéterminée de ladite solution traitée 70. Le reste de la solution 70 étant ensuite transféré dans un compartiment de convergence 47 situé en position inférieure de ladite carte 1, mais en position supérieure par rapport aux moyens de sortie des liquides qu'ils soient associés à la solution traitée 70 ou aux déchets. Le compartiment de convergence 47 contient donc une seule solution contenant l'ensemble des solutions amplifiées devant soit subir d'autres traitements dans la même carte, soit être tranféré dans un autre dispositif pour permettre leur analyse. Cette solution unique provient de l'ensemble des voies qui constitue la carte 1, c'est-à-dire dans le cas présent, la voie gauche et la voie droite.

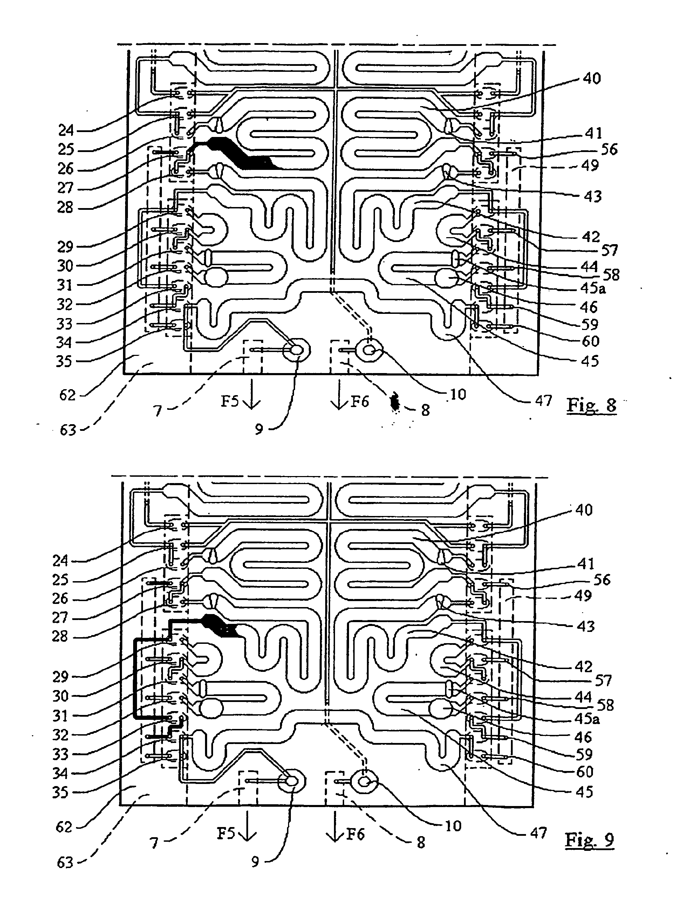

Lorsque les produits d'amplification contenus dans le compartiment de convergence 47 sont transférés vers un autre dispositif pour permettre leur analyse, ceci peut être effectué par l'intermédiaire d'un tube, tel que décrit en figures 8 à 11 de la demande PCT/FR99/02137 déposée le 8 septembre 1999 par la demanderesse. Cet autre dispositif peut être constitué par un support comportant par exemple sur une de ses faces des sondes de capture à forte densité, par exemple les puces à ADN mises au point par la société Affymetrix ("Accessing Genetic Information with High-Density DNA arrays", M. Shee et al., Science, 274, 610-614. "Light-generated oligonucleotide arrays for rapide DNA sequence analysis", A. Caviani Pease et al., Proc. Natl. Acad. Sci. USA, 1994, 91, 5022-5026), ou tout autre système de puces comportant des acides nucléiques fixés sur un support solide, comme les puces à ADN définies précédemment.

L'aliquote présent dans le compartiment d'échantillonnage 44 va ensuite être transféré vers un compartiment de détection et de lecture 45. Dans ce compartiment 45 est présent une pastille qui contient des moyens de détection 45a. Sur la base des documents de l'état de la technique ci-dessus évoqués, il est possible de fabriquer par exemple des pastilles 45a contenant des acides nucléiques marqués complémentaires de tout ou parties des amplicons que l'on doit obtenir lors des étapes précédentes.

Comme cela a été décrit précédemment il est également possible d'effectuer le marquage lors de l'amplification par l'intermédiaire d'amorces marquées. Dans ce cas, il n'y a plus besoin d'avoir une pastille 45a, et le compartiment 45 n'est alors qu'un simple compartiment de lecture.

Ce compartiment de marquage et de lecture 45 comporte donc une pastille de marqueurs 45a à son entrée et une cellule de lecture 46 en aval. Cette cellule de lecture 46 permet de détecter, par exemple par mesure de fluorescence, si l'amplification a bien été réalisée. Si tel est le cas, ceci permet au manipulateur ou à l'automate qui utilise une telle carte 1, de savoir s'il y a nécessité de transférer la solution traitée 70, présente dans le compartiment de convergence 47 vers des moyens d'analyse des séquences amplifiées, ces moyens pouvant être intégrés à la carte 1 ou être contenus dans un autre dispositif plus particulièrement destiné à cette fonction.

Les mouvements de liquides au sein de la carte 1 que ce soit la solution à tester 69, la solution traitée 70, le liquide de lavage 71 ou le liquide d'élution 72 sont réalisés par l'intermédiaire de filtres hydrophobes qui sont présents en aval de certaines vannes. Chaque films hydrophobes 48 ou 49 comporte un certain nombre de filtres d'arrêt, référencés 50 à 55 pour le film 48 ou 56 à 60 pour le film 49. Leur utilisation sera développée ultérieurement.

### DESCRIPTION DES VANNES :

Comme décrit dans la demande de brevet FR99/08116 déposée le 1999 par la demanderesse, les vannes 11 à 35 et 61 ont une structure qui permet de répondre aux problèmes de soudure de films sur un support solide, tel que le corps d'une carte réactionnelle 1, généralement constitué de matières plastiques. Cette invention trouve une application particulièrement intéressante dans la carte 1 selon la présente invention, ainsi le corps de ladite carte 1 comporte à un certain endroit une rainure ou renfoncement 74 de forme périphérique, bien représenté en figure 16, qui va recevoir dans la zone circonscrite une partie du film transparent 67 qui est flexible, lesdits films 67, au nombre de quatre sur la figure 1, et corps de la carte 1 étant solidarisés l'un à l'autre par une soudure 84 située au fond de la rainure 74. De ce fait, la soudure n'engendre aucune déformation de la surface supérieure de la carte 1 et donc aucun problème ultérieur pour utiliser ladite carte 1 et effectuer des analyses. La manipulation de ces vannes 11 à 35 et/ou 61 peut être réalisée par l'action d'électro-aimants ou de vérins de dimensions adaptées comme cela est représenté aux figures 15 et 16.

### FONCTIONNEMENT DE LA CARTE :

Dans la description qui suit la référence qui sera faite aux vannes 11 à 35 et 61, ne concernera que les vannes 11 à 35 de la voie de gauche, dans le cas où aucune précision sur la voie concernée n'est précisée. Toute information sur les vannes 11 à 35 et 61 de la voie de droite verront leur position sur cette voie de droite précisée. D'autre part, il convient de souligner que lorsqu'une vanne 11 à 35 est fermée, c'est soit l'orifice de gauche, dit orifice extérieur, soit l'orifice de droite, dit orifice intérieur, de ladite vanne 11 à 35 qui est bouché. Ceci est également vrai pour la voie de droite et pour les vannes 11 à 35 et 61, mais la position est inversée. Ainsi, l'orifice de droite est dit orifice extérieur, et l'orifice de gauche est dit orifice intérieur, de ladite vanne 11 à 35 ou 61.

Enfin, les vannes 11 à 35 et 61 sont normalement au repos en position ouverte. Lors du transfert d'un fluide, liquide ou gaz, ce sont les vannes qui sont fermées qui vont orienter ce fluide.

### 1^{ère} étape - Dosage de la solution à tester:

Dans cette première étape, le fonctionnement de l'ensemble des constituants sera exposé en détail. Ce sera moins le cas par la suite néanmoins les grandes fonctions seront les mêmes, et il sera facile d'extrapoler les informations de cette première étape pour les étapes ultérieures.

On introduit dans la carte 1 la solution à tester 69 via l'entrée 3, selon F2. La solution 69 emprunte le canal 64 entre l'entrée 3 et la première vanne 11 qui est ouverte. De ce fait, ladite solution 69 peut passer au niveau de la deuxième vanne 12 qui est fermée au niveau de son orifice extérieur, ce qui empêche cette solution 69 de prendre le canal 64 qui retourne vers l'entrée 2 et dirige ladite solution 70 vers la vanne à bille d'entrée 6 qui est elle-même ouverte. De cette vanne à bille 6 partent deux canaux 64 l'un vers la voie de gauche l'autre vers la voie de droite. Le canal allant vers la voie de droite est bouché par fermeture de l'orifice intérieur de la deuxième vanne 12 de la voie de droite. Le canal allant vers la voie de gauche, pour sa part, permet le passage de la solution à tester 69 car la troisième vanne 13 et la septième vanne 17 sont ouvertes. L'objectif est de permettre le remplissage du compartiment de dosage 36 de ladite solution 69 selon la figure 2, de ce fait l'orifice intérieur de la quatrième vanne 14 et l'orifice extérieur de la huitième vanne 18 sont fermés, c'est également le cas de l'orifice extérieur de la quatrième vanne 14 de la voie de droite.

Si on désire remplir également le compartiment de dosage 36 de la solution à tester 69 de la voie de droite, il convient de fermer l'orifice intérieur de la quatrième vanne 14 de la voie de droite, ce qui laisse l'orifice extérieur de cette vanne 14 ouvert de sorte que le remplissage du compartiment 36 est possible, alors que celui du compartiment de dosage 37 du liquide d'élution 72 n'est pas possible. Il convient également de fermer l'orifice extérieur de la vanne intermédiaire 61 et l'orifice extérieur de la huitième vanne 18 de la voie de droite.

Si l'on revient sur le seul remplissage du compartiment 36 de la voie de gauche, la solution à tester 69 va pouvoir remplir tous les canaux 64 depuis l'entrée 3 jusqu'au filtre d'arrêt 51 de ladite solution 69. Ce filtre arrêt 51 est placé dans le prolongement de l'orifice extérieur de la septième vanne 17. Il est constitué par une partie du premier filtre hydrophobe 48, ce qui permet le passage de fluide gazeux mais pas de fluide liquide. Un matériau intéressant pour constituer ce filtre hydrophobe est une membrane VERSAPOR 200R fabriquée par la société américaine GELMAN SCIENCES (USA). C'est la configuration de la figure 2. Lorsque ce type de filtre a été utilisé une fois, il ne peut être réutilisé une seconde fois.

Ensuite afin de doser exactement le volume de la solution 69 présent dans le compartiment de dosage 36, dont le volume est de 100 µl, on va purger les canaux 64. Pour cela, on introduit selon F1 un liquide de lavage 71 par l'entrée 2. Dans ce cas on ferme les vannes suivantes :
- l'orifice intérieur de la première vanne 11,
- l'orifice intérieur de la troisième vanne 13,
- l'orifice intérieur de la quatrième vanne 14,
- l'orifice intérieur de la huitième vanne 18,
- l'orifice intérieur de la quatorzième vanne 24,
- l'orifice intérieur de la quinzième vanne 25,
- l'orifice intérieur de la deuxième vanne 12 de la voie de droite,
- l'orifice intérieur de la troisième vanne 13 de la voie de droite,
- l'orifice intérieur de la quatrième vanne 14 de la voie de droite,
- l'orifice intérieur de la huitième vanne 18 de la voie de droite,
- l'orifice intérieur de la quatorzième vanne 24 de la voie de droite, et
- l'orifice intérieur de la quinzième vanne 25 de la voie de droite.

Une fois que le lavage est effectué, on remplace le liquide de lavage 71 présent dans les canaux 64 par de un fluide gazeux inerte, par exemple de l'air. Dans ce cas, on injecte de l'air sous pression par l'entrée 5 selon F4. Les vannes fermées sont alors identiques, à l'exception des caractéristiques suivantes :
- réouverture de l'orifice intérieur de la première vanne 11,
- fermeture de l'orifice intérieur de la deuxième vanne 12,
- fermeture de l'orifice intérieur de la première vanne 11 de la voie de droite, et
- réouverture de l'orifice intérieur de la deuxième vanne 12 de la voie de droite.

Dans cette configuration, le résultat obtenu est celui représenté à la figure 3. La solution à tester 69, qui était présente au niveau des canaux 64, a ainsi été évacuée par la sortie des déchets 8 selon F6. De plus, les canaux 64 sont propres, seule la portion de canal 64 entre l'entrée 2 et l'orifice intérieur de la deuxième vanne 12 contient du liquide de lavage 71, qui pourra être utilisé ultérieurement. Bien entendu, il faut alors que les vannes à bille d'entrée 6 et de sortie des déchets 10 soient ouvertes.

On peut bien entendu répéter ce lavage plusieurs fois. Toutefois ce résultat peut être obtenu en n'effectuant pas le lavage. Dans ce cas, il convient uniquement de pousser les restes de la solution 69 situés dans les canaux 64 par l'entrée 5 d'air selon F4. Le résultat sera identique à une seule différence, il n'y aura pas de liquide de lavage 71 entre l'entrée 2 et l'orifice extérieur de la deuxième vanne 12, et le liquide de lavage 71 présent entre l'orifice intérieur de la deuxième vanne 12 et la vanne à bille d'entrée 6 sera remplacé par de la solution à tester 69. Cette possibilité est donc moins intéressante, même si elle est possible, car il restera dans la carte 1 de la solution 69 susceptible de franchir la vanne à bille 6 dès que l'on introduira du liquide de lavage 71 selon F1.

Dans les deux cas de figure qui viennent d'être évoqués, il est possible de dénaturer les acides nucléiques présents dans ce compartiment 36. Pour ce faire, on chauffe à une température comprise entre 80 et 100°C.

### 2^{ème} étape - Séparation des acides nucléiques contenus dans la solution à tester :

Dans cette deuxième étape, la solution à tester 69, qui vient d'être dosée et est présente dans le compartiment 36, est transférée dans le compartiment suivant, dit de séparation 38. On va donc pousser la solution à tester 69 présente dans le compartiment 36 vers le compartiment de séparation 38, par l'introduction dans le réseau de canaux 64 d'un fluide inerte, tel que de l'air, par l'entrée 5 selon F4. Dans ce cas les vannes fermées sont les suivantes :
- l'orifice intérieur de la deuxième vanne 12,
- l'orifice intérieur de la quatrième vanne 14,
- l'un des orifices de la sixième vanne 16,
- l'orifice intérieur de la huitième vanne 18,
- l'orifice intérieur de la onzième vanne 21,
- l'orifice extérieur de la quinzième vanne 25
- l'orifice intérieur de la première vanne 11 de la voie de droite, et
- l'orifice extérieur de la quatrième vanne 14 de la voie de droite.

Pour information la fermeture d'une vanne peut ne pas être obligatoire, si la fermeture d'une autre vanne en amont ou en aval a le même effet. Ainsi, la sixième vanne 16 pourrait être ouverte. Dans ce cas, il conviendra de fermer l'orifice intérieur de la cinquième vanne 15.

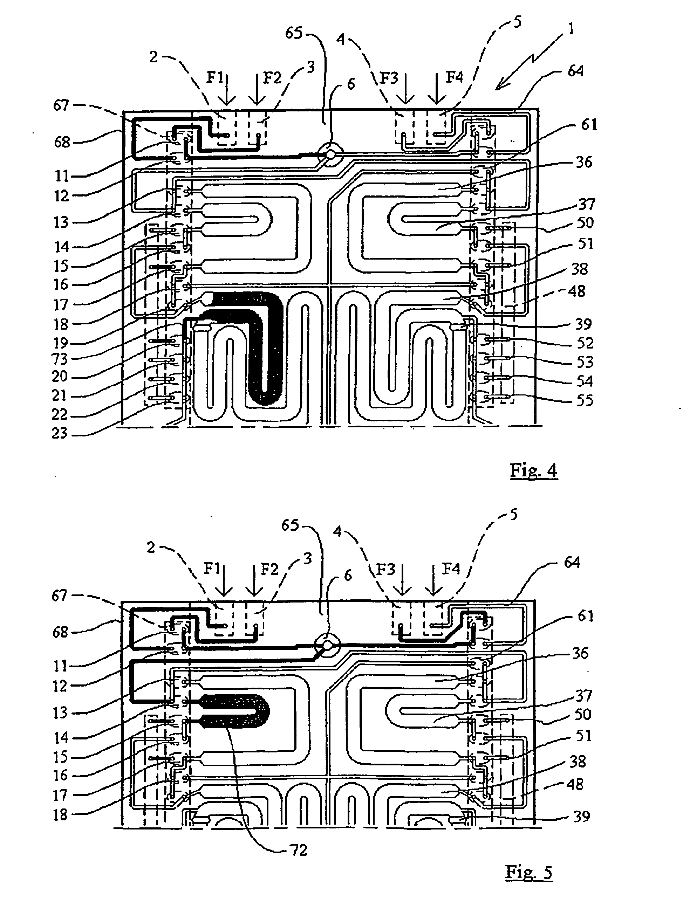

Le transfert de la solution 69 dosée est obtenu comme cela est bien représenté sur la figure 4 et est rendu possible du fait de la présence en relation avec ce compartiment 38 avec un filtre d'arrêt 52 qui est relié à une dérivation 73 en position intermédiaire le long dudit compartiment 38. Ce filtre 52 étant en relation avec la dixième vanne 20, l'air présent en aval de ladite solution 69 peut s'échapper par ce filtre d'arrêt 52. Lorsque la solution 69 atteint le filtre d'arrêt 52, via la dérivation 73, la progression de ladite solution 69 est stoppée. De plus, le volume total de cette solution 69 est inférieur au volume dudit compartiment 38 en amont de ladite dérivation 73 et sera donc bien circonscrit dans cette partie amont du compartiment 38.

On note que dans cette position la solution 69 dosée n'a pas encore atteint la pastille de particules magnétiques 39, qui est elle-même située en aval de la dérivation.

Dans cette position, le volume d'air en aval de ladite solution à tester 69 est emprisonné mais reste d'un volume important. Il est ensuite possible en forçant l'entrée d'air selon F4 de compresser l'air emprisonné. Lorsque l'on fait plusieurs mouvements de va-et-vient, la solution 69 va permettre de dissoudre la pastilles de particules magnétiques 39, particules qui seront présentes de façon homogène dans cette nouvelle solution 70, dite solution traitée 70, nom qui lui sera donné par la suite quelque soit le stade de traitement auquel elle se trouve (particules magnétiques, constituants structurels, constituants fonctionnels, amplicons) à partir du moment où le liquide de base utilisé est la solution à tester 69. De plus, pour le liquide de lavage 71 qui sera décrit plus loin, lorsque ce liquide de lavage 71 a fait son office et contient des déchets qu'il faut évacuer, sa référence n'est pas modifier. D'autre part, pour le liquide d'élution 72 qui sera également décrit plus tard, lorsque le liquide d'élution 72 reprend les constituants structurels, constituants fonctionnels, amplicons ou autres, ce liquide est alors appelé liquide traitée 70.

Le mouvement de va-et-vient exposé ci-dessus, et qui sera expliqué également en relation avec le liquide de lavage 71 et d'élution 72 ci-dessous, est possible du fait de la configuration du compartiment de séparation 38. Ainsi ce compartiment 38 est d'un volume plus important que le volume de liquide à tester 69 introduit, de telle sorte que le liquide 69 circonscrit en aval un volume d'air qui est emprisonné. De ce fait, lorsque l'on pousse ledit liquide 69 par une augmentation de pression en amont, soit par une poussée due audit liquide 69 lui-même soit par une augmentation de la pression d'air par introduction d'un surplus gazeux au niveau de l'entrée 5, et qu'on relâche ensuite cette poussée, il est possible d'effectuer un mouvement de va-et-vient au niveau de la pastille de particules magnétiques 39. Ce mouvement optimise ainsi la mise ou la remise en suspension desdites particules magnétiques.

A ce propos, le rapport existant entre le volume du compartiment 38 en amont de la dérivation 73 et le volume dudit compartiment 38 en aval de ladite dérivation 73 est compris entre 1 pour 2 et 1 pour 5, préférentiellement il est de 1 pour 3. Le rapport entre le volume de ladite solution 70 et le volume du compartiment 38 en aval de cette solution 70 est donc sensiblement égale ou inférieure. Dans le cas où ce rapport est inférieur, il est par exemple compris entre 1 pour 2,5 et 1 pour 6, préférentiellement il est de 1 pour 3,5. Du fait des rapports mentionnés ci-dessus, dans l'exemple décrit sur les figures le volume total du compartiment de dosage 36 étant de 50 µl, le compartiment de séparation 38 est donc de 150 µl.

Les particules magnétiques ont la propriété de lier spécifiquement les acides nucléiques. Pour cela, il faut soumettre le mélange de solution à tester 69 et les pastilles de particules magnétiques 39 à une température ou un cycle de températures pouvant être compris entre 25 et 60°C. Ensuite on procède à une séparation magnétique des particules contre au moins l'un des films transparents 65 et/ou 66 qui cloisonnent la carte au niveau de sa face avant 62 et/ou arrière 63, au niveau du compartiment de séparation. La séparation magnétique des particules magnétiques à lieu avant que la solution traitée 70 soit évacuée selon F6.

Eventuellement, ces étapes de dosage de solution traitée 70 et la séparation des acides nucléiques peuvent être réitérées N fois, N étant compris entre 1 et 10, afin de traiter des volumes de solution traitée 70 supérieurs au volume du compartiment de séparation 38.

On procède ensuite au lavage des particules magnétiques afin que seuls les acides nucléiques recherchés soient retenus. Lorsque du liquide de lavage 71 est introduit selon F1, par l'entrée 2, on ferme les vannes suivantes :
- l'un des orifices de la première vanne 11,
- l'orifice intérieur de la quatrième vanne 14,
- l'un des orifices de la sixième vanne 16,
- l'orifice intérieur de la huitième vanne 18,
- l'orifice intérieur de la douzième vanne 22,
- l'un des orifices de la seizième vanne 26,
- l'un des orifices de la vanne complémentaire 61 de la voie de droite,
- l'orifice intérieur de la deuxième vanne 12 de la voie de droite, et
- l'orifice extérieur la quatrième vanne 14 de la voie de droite.

Le liquide de lavage 71 va donc passer dans le compartiment de séparation 38, où les particules magnétiques sont toujours aimantées. Ce liquide est stoppé dans son mouvement par le filtre d'arrêt 53, puis la séparation magnétique est interompue et on procède à un mouvement de va-et-vient afin que ledit liquide de lavage 71 puisse nettoyer au mieux les particules magnétiques porteuses des acides nucléiques.

La séparation magnétique des particules magnétiques est à nouveau mise en oeuvre avant que le liquide de lavage 71 est évacué selon F6. Les vannes fermées sont bien entendu identiques à celles utilisées lors de l'évacuation du reste de la solution à tester 70, dont les acides nucléiques ont été capturés par les particules magnétiques.

Lorsque du liquide de lavage est réintroduit selon F5 pour effectuer un second lavage, on ferme les mêmes vannes que pour le premier lavage, à l'exception de l'orifice intérieur de la douzième vanne 22 qui est ouvert alors que c'est l'orifice intérieur de la treizième vanne 23 qui est fermé. Dans cette configuration le nouveau liquide de lavage 71 introduit est arrêté dans son mouvement par le filtre d'arrêt 54, lié à la douzième vanne 22. La séparation magnétique est interrompue et on procède à un mouvement de va-et-vient afin que ledit liquide 71 puisse nettoyer au mieux les particules magnétiques porteuses des acides nucléiques.

Une fois que le lavage est effectué, on remplace le liquide de lavage 71 présent dans les canaux 64 par de un fluide gazeux inerte, par exemple de l'air. Dans ce cas, on injecte de l'air sous pression par l'entrée 5 selon F4. Le liquide de lavage 71 évacué sort de la carte 1 par la sortie 8 selon F6 via la vanne à bille de sortie des déchets 10. Les vannes fermées sont alors identiques, à l'exception des caractéristiques suivantes :
- réouverture de l'orifice intérieur de la première vanne 11,
- fermeture de l'orifice intérieur de la deuxième vanne 12,
- fermeture de l'orifice intérieur de la première vanne 11 de la voie de droite, et
- réouverture de l'orifice intérieur de la deuxième vanne 12 de la voie de droite.

Cette étape peut bien entendu être réalisée entre les deux étapes de lavage.

On peut bien entendu répéter ce lavage plusieurs fois, le liquide de lavage 71 souillé étant toujours évacué par la sortie 8, via la vanne à bille de sortie 10, selon F6. Dans ce cas il faudra prévoir d'autres filtres d'arrêt entre les filtres d'arrêt 54 et 55.

### 3^{ème} étape - Reprise des particules magnétiques par le liquide d'élution :

Dans cette troisième étape, la solution à tester 70 a été presque complètement évacuée selon F6. Seuls restent accrochés sur les particules magnétiques, les acides nucléiques qui ont été capturés lors de l'étape précédente. Ces particules magnétiques sont toujours présentes car la séparation magnétique est encore effectuée en attendant la reprise des acides nucléiquespar un liquide d'élution 72, ce qui constitue l'objectif de cette étape.

Préalablement il convient de bien doser le liquide d'élution 72 qui va être utilisé. Le volume qui est nécessaire dans le cas présent est de 50 µl. Il y a donc un rapport de 1 pour 2 entre le volume de la solution traitée 70 et le volume du liquide d'élution 72. Néanmoins un rapport variant entre 1 pour 1 et 1 pour 10 est possible. Du fait que cette étape peut être réitérée de 1 à 10 fois, ce rapport peut donc aller de 1 à 100. Le dosage du volume de liquide d'élution 72 est réalisé dans le compartiment de dosage 37.

Pour ce faire, on introduit le liquide d'élution 72 par l'entrée 4, selon F3. Ledit liquide 72 emprunte ensuite les canaux 64 pour remplir le compartiment de dosage 37. Il 72 est arrêté dans ce mouvement par l'intermédiaire du filtre d'arrêt 50.

Les vannes fermées sont alors les suivantes :
- l'orifice intérieur de la deuxième vanne 12,
- l'orifice extérieur de la troisième vanne 13,
- l'orifice intérieur de la sixième vanne 16, et
- l'orifice extérieur de la deuxième vanne 12 de la voie de droite.
Cette configuration est bien représentée sur la figure 5

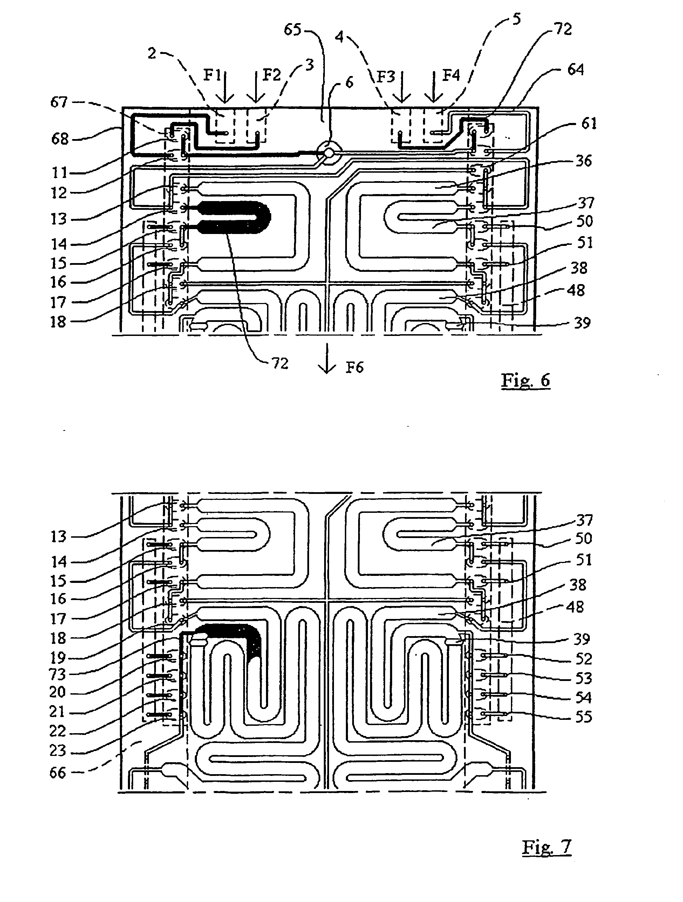

Une fois que le dosage du liquide d'élution 72 est effectué, on le remplace dans les canaux 64 par de un fluide gazeux inerte, par exemple de l'air. Dans ce cas, on injecte de l'air sous pression par l'entrée 5 selon F4. Le liquide d'élution 72 évacué sort de la carte 1 par la sortie 8 selon F6 via la vanne à bille de sortie des déchets 10. On obtient ainsi une carte 1 qui a une répartition de liquides telle que représentée sur la figure 6. Les vannes fermées sont alors les suivantes :
- fermeture de l'un des orifices de la première vanne 11,
- réouverture de l'orifice extérieur de la deuxième vanne 12,
- fermeture de l'orifice intérieur de la huitième vanne 18,
- fermeture de l'orifice intérieur de la quatorzième vanne 24,
- fermeture de l'orifice intérieur de la quinzième vanne 25,
- réouverture de l'orifice extérieur mais fermeture de l'orifice intérieur de la troisième vanne 13,
- fermeture de l'orifice intérieur de la troisième vanne 13 de la voie de droite,
- fermeture de l'orifice intérieur de la quatrième vanne 14 de la voie de droite,
- fermeture de l'orifice intérieur de la huitième vanne 18 de la voie de droite,
- fermeture de l'orifice intérieur de la quatorzième vanne 24 de la voie de droite, et
- fermeture de l'orifice intérieur de la quinzième vanne 25 de la voie de droite.

Le liquide d'élution 72, qui vient d'être dosé et est présent dans le compartiment 37, est transféré dans le compartiment suivant, dit de séparation 38. On va donc pousser ledit liquide 72 présent dans le compartiment 36 vers le compartiment de séparation 38, par l'introduction dans le réseau de canaux 64 d'un fluide inerte, tel que de l'air, par l'entrée 5 selon F4. Le mouvement du liquide d'élution 72 est stoppé lorsque ledit liquide 72 atteint le filtre d'arrêt 55.Dans ce cas les vannes fermées sont les suivantes :
- l'orifice intérieur de la deuxième vanne 12,
- l'orifice extérieur de la troisième vanne 13,
- l'orifice extérieur de la neuvième vanne 19,
- l'un des orifices de la quatorzième vanne 24,
- l'orifice extérieur de la quinzième vanne 25, et
- l'orifice intérieur de la première vanne 11 de la voie de droite.

La configuration de la carte 1 après le déplacement du liquide d'élution 72 est représentée dans la figure 7. Dans cette position, ledit liquide d'élution 72 permet la reprise des particules magnétiques associées aux acides nucléiques. Il est possible à ce stade d'effectuer un mélange comme indiqué précédemment avec la solution à tester 70 et les particules magnétiques de la pastille 39.

Le liquide d'élution 72, pouvant être un tampon tel que du Tris à pH 7,5 et de faible force ionique, va permettre de séparer les acides nucléiques des particules magnétiques, en procédant à une incubation à une température comprise entre 25 et 60°C. On va ensuite procéder à nouveau à une séparation magnétiques des particules magnétiques seules, les acides nucléiques restant en suspension dans ledit liquide 72.

### 4^{ème} étape - Transfert du liquide d'élution et reprise des constituants structurels de l'amplification :

Cette quatrième étape est bien représentée à la figure 8. Les vannes fermées sont les suivantes :
- l'orifice intérieur de la deuxième vanne 12,
- l'orifice extérieur de la troisième vanne 13,
- l'orifice extérieur de la neuvième vanne 19,
- l'un des orifices de la quatorzième vanne 24,
- l'orifice intérieur de la quinzième vanne 25,
- l'orifice extérieur de la dix-huitième vanne 28, et
- l'orifice intérieur de la première vanne 11 de la voie de droite.

Dans cette configuration, le liquide d'élution 72 contenant les acides nucléiques extraits de la solution à tester 70 est transféré du compartiment de séparation 38 vers le compartiment de reprise 40 des constituants permettant l'amplification. Il s'agit là des constituants structurels permettant cette amplification. Ces constituants sont amalgamés et forment une pastille 41 présente à l'entrée du compartiment 40, de sorte que le liquide d'élution va dissoudre rapidement la pastille 41 lors de son entrée dans ce compartiment 40 et va entraîner les constituants avec lui jusqu'à sa position telle que définie en figure 8.

Le volume de ce compartiment 40 est de 150 µl, soit un rapport de 1 pour 3 avec les 50 µl du liquide d'élution 72. Néanmoins ce rapport peut être de 1 pour 2 à 1 pour 5. Ce rapport permet le déplacement dudit liquide 72 contenant les acides nucléiques et chargé en constituants structurels, ce qui facilite le mélange.

Le transfert est effectué sous l'action d'une augmentation de la pression à l'intérieur de la carte 1 en amont du liquide d'élution 72. Cette augmentation de pression est réalisée en injectant par l'entrée 5 de l'air ou tout autre fluide gazeux inerte selon F4.

Le liquide 72, contenant d'une part les acides nucléiques d'autre part les constituants structurels de l'amplification, va être stoppé par le filtre d'arrêt 56 associé à la dix-septième vanne 27.

Lors de cette étape, l'orifice intérieur de la seizième vanne 26 et l'orifice intérieur de la dix-septième vanne 27 sont fermés lorsque ledit liquide 72 est dans ce compartiment 40. On incube pendant une durée de 1 à 15 minutes à une température comprise entre 30 et 65°C, ce qui permet la fixation des amorces sur les acides nucléiques correspondants. Puis on ajuste la température à une valeur comprise entre 37 et 42°C. Comme exposé précédemment, le liquide résultant de cette 4^{ème} étape, qui contient essentiellement le liquide d'élution 72 et les constituants structurels aptes dans certaines conditions à permettre l'amplification, est appelé solution ou liquide traité 70.

### 5^{ème} étape - Transfert du liquide traité et reprise des constituants fonctionnels de l'amplification :

Cette cinquième étape est bien représentée à la figure 9. Les vannes fermées sont alors les suivantes :
- l'orifice intérieur de la deuxième vanne 12,
- l'orifice extérieur de la troisième vanne 13,
- l'orifice intérieur de la neuvième vanne 19,
- l'orifice intérieur d'au moins l'une des vannes 20, 21, 22 et/ou 23 et/ou l'un des orifices de la quatorzième vanne 24,
- l'orifice intérieur de la quinzième vanne 25,
- l'orifice intérieur de la vingt-quatrième vanne 34, et
- l'orifice intérieur de la première vanne 11 de la voie de droite.

Dans cette configuration, le liquide d'élution 72, contenant les acides nucléiques et les constituants structurels aptes à permettre une amplification, appelé solution traitée 70, est transféré du compartiment de reprise 40 des constituants structurels permettant l'amplification vers le compartiment de reprise 42 des constituants fonctionnels permettant cette même amplification. Le mouvement de ladite solution traitée 70 est stoppé par le filtre d'arrêt 59.

Ces constituants fonctionnels contiennent essentiellement des enzymes permettant l'amplification. La nature et le nombre de ces enzymes et des autres constituants est fonction de la technique d'amplification qui est choisie. Ces constituants sont amalgamés et forment une pastille 43 présente à l'entrée du compartiment 42, de sorte que la solution traitée 70 va dissoudre rapidement la pastille 43 lors de son entrée dans ce compartiment 42 et va entraîner les constituants avec lui jusqu'à sa position telle que définie en figure 9. Cette position n'est qu'une position intermédiaire momentanée car la pression selon F4 va permettre par la suite de transférer le liquide d'élution 72 contenant les constituants structurels et fonctionnels permettant de réaliser l'amplification, selon, bien entendu, une autre configuration des vannes.

Le transfert est identique à celui de la quatrième étape, il est donc effectué sous l'action d'une augmentation de la pression à l'intérieur de la carte 1 en amont du liquide traité 70. Cette augmentation de pression est réalisée en injectant par l'entrée 5 de l'air ou tout autre fluide gazeux inerte selon F4. Il y a également le même rapport de 1 pour 3 entre le volume de liquide 70 et le volume du compartiment 42, avec le même effet de mélange par va-et-vient déjà décrit précédemment.

Lors de cette étape, l'orifice intérieur de la dix-huitième vanne 28 et l'orifice intérieur de la dix-neuvième vanne 29 sont fermés lorsque ledit liquide 70 est dans ce compartiment 42. On chauffe pendant 30 à 90 minutes à une température comprise entre 30 et 75°C, préférentiellement entre 37 et 42°C, si l'on veut effectuer une amplification isotherme comme les techniques NASBA, TMA, 3SR, SBA. Pour effectuer une PCR, il convient de changer de températures plusieurs fois en restant dans la plage de température 30 à 100°C, afin de pouvoir réaliser plusieurs cycles successifs d'amplification.

Il faut noter que ces quatrième et cinquième étapes peuvent être associées en une seule étape. La seule condition alors est d'utiliser des enzymes stables à une température supérieure ou égale à 50°C, dites thermostables.

### 6^{ème} étape - Transfert du liquide traité dans le compartiment d'échantillonnage, dans le compartiment de détection et de lecture et dans le compartiment de convergence :

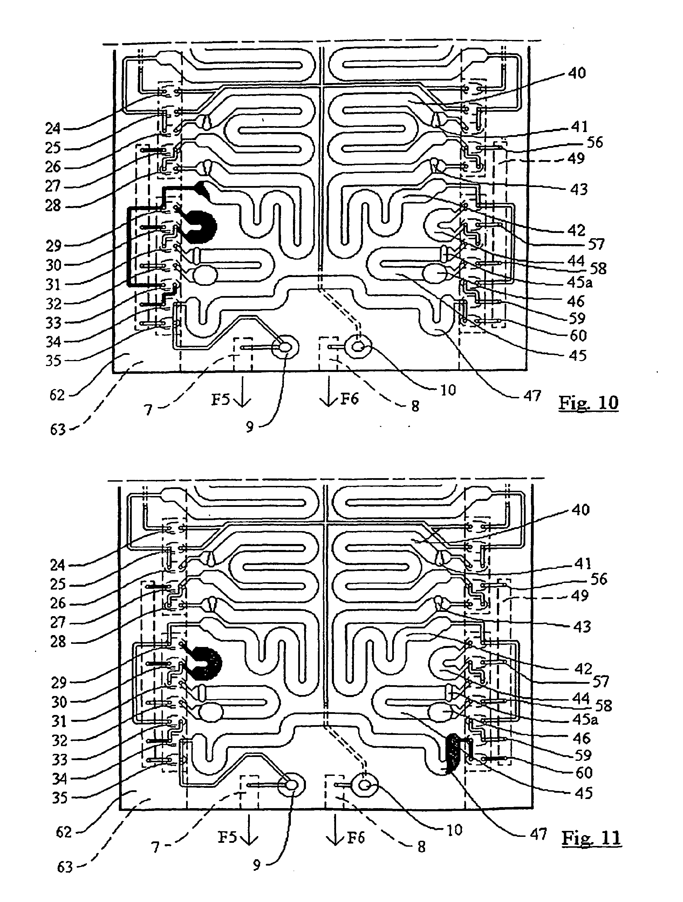

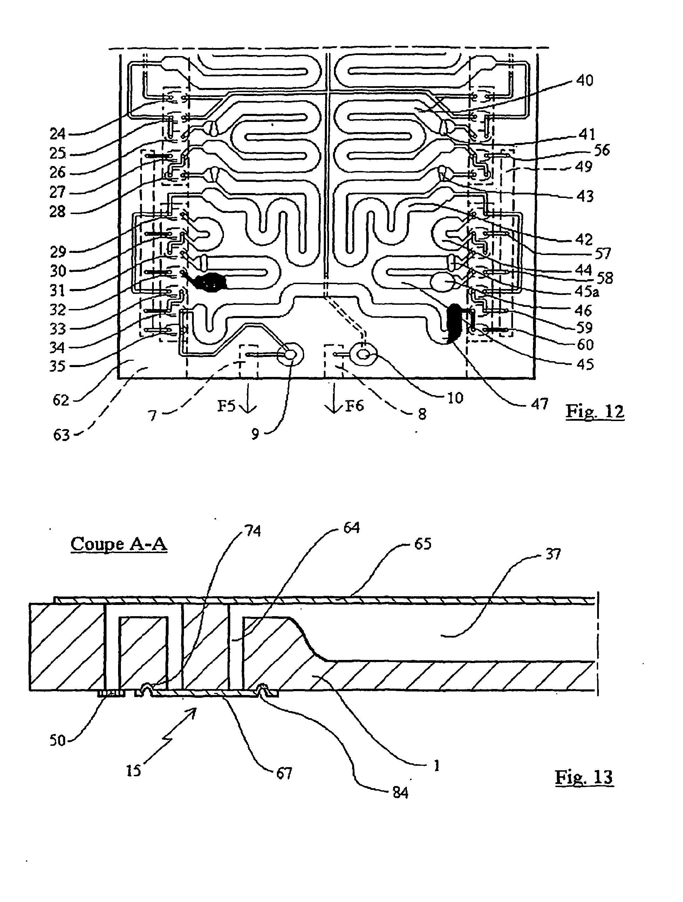

Lors de cette sixième étape bien représentée aux figures 10 à 12, trois phases successives se produisent. Ces phases sont les suivantes :
- le transfert d'une première partie du liquide traité 70, c'est-à-dire sensiblement 20 µl, contenant ou ne contenant pas le produit d'amplification, depuis le compartiment de reprise 42 des constituants fonctionnels vers le compartiment d'échantillonnage 44, ce qui correspond à la figure 10,
- le transfert d'une seconde partie du liquide traité 70, correspondant au reste dudit liquide 70, soit sensiblement 30 µl, depuis le compartiment de reprise 42 des constituants fonctionnels vers le compartiment de convergence 47, ce qui correspond à la figure 11, et
- le transfert de cette partie dudit liquide traité 70 depuis le compartiment d'échantillonnage 44 vers le compartiment de détection et de lecture 45, ce qui correspond à la figure 12.

Selon la figure 10, les vannes fermées sont les suivantes :
- l'orifice intérieur de la deuxième vanne 12,
- l'orifice extérieur de la troisième vanne 13,
- l'orifice extérieur de la neuvième vanne 19,
- l'orifice intérieur d'au moins l'une des vannes 20, 21, 22 et/ou 23 et/ou l'un des orifices de la quatorzième vanne 24,
- l'orifice intérieur de la quinzième vanne 25,
- l'orifice extérieur de la vingt-et-unième vanne 31
- l'orifice intérieur de la vingt-quatrième vanne 34, et
- l'orifice intérieur de la première vanne 11 de la voie de droite.

Ce transfert permet de doser précisément un aliquote de sensiblement 20 µl de solution traitée 70, qui va être ensuite transféré dans le compartiment de détection et de lecture 45. Lors de cette phase, le liquide 70 est stoppé dans son mouvement par la présence d'un filtre d'arrêt 57, au niveau du compartiment de détection et de lecture 45, et d'un filtre d'arrêt 59, en aval du compartiment de convergence 47.

Selon la figure 11, les vannes fermées sont identiques à la phase précédente. Il y a seulement les différences suivantes :
- ouverture de l'orifice intérieur de la vingt-quatrième vanne 34,
- fermeture de l'orifice intérieur de la vingt-cinquième vanne 35,
- fermeture de l'orifice extérieur de la vingt-quatrième vanne 34 de la voie de droite, et
- fermeture de l'orifice intérieur de la vingt-cinquième vanne 35 de la voie de droite.

De ce fait, le transfert vers le compartiment de convergence 47 est possible pour le reste du liquide traité 70 qui n'est pas pris en compte par le compartiment 44. Cette partie dudit liquide 70 est stoppée dans son mouvement par le filtre d'arrêt 60, associé à la vingt-cinquième vanne 35.

Selon la figure 12, les vannes fermées sont les suivantes :
- l'orifice intérieur de la deuxième vanne 12,
- l'orifice extérieur de la troisième vanne 13,
- l'orifice extérieur de la neuvième vanne 19,
- l'orifice intérieur d'au moins l'une des vannes 20, 21, 22 et/ou 23 et/ou l'un des orifices de la quatorzième vanne 24,
- l'orifice intérieur de la quinzième vanne 25,
- l'un des orifices de la vingt-troisième vanne 33, et
- l'orifice intérieur de la première vanne 11 de la voie de droite.

La dix-neuvième vanne 29 est ouverte, ce qui permet le transfert vers le compartiment de détection et de lecture 45 du liquide 70, précédemment contenu dans le compartiment d'échantillonnage 44, contenant éventuellement des amplicons marqués. On note que lors de cette phase, l'aliquote dudit liquide 70 va passer par une zone en amont dudit compartiment 45 où est présente une pastille de détection 45a. Une telle pastille 45a peut contenir, par exemple, des produits de marquage et de coupure des amplicons, tels que décrits dans la demande de brevet PCT/FR99/01469 de la demanderesse déposée le 17 juin 1999, sous priorité du 17 juin 1998.

Le liquide 70 contenant les amplicons éventuellement marqués et clivés poursuit son mouvement et est stoppé dans la partie aval du compartiment 45 par un filtre d'arrêt 58, de sorte que ledit liquide 70 est présent au niveau d'une cellule de lecture 46. Au niveau de cette cellule 46, il est possible de contrôler que l'amplification s'est déroulée et que la phase suivante peut être effectuée. Le contrôle de cette amplification peut être réalisé par l'intermédiaire d'oligonucléotides non marqués, dits sondes de capture, fixés au niveau de la cellule de lecture 46. Ces sondes sont aptes à s'hybrider avec le produit d'amplification qui a dû être amplifié, marqué et clivé.

Dans un autre mode de réalisation, le liquide 70 contenant les amplicons non marqués est stoppé au niveau de la cellule 46. Le contrôle de l'amplification met en oeuvre une technique de détection des amplicons non marqués telle que celle décrite par exemple :
- dans les demandes de brevet WO-A-95/13399, WO-A-97/39008 ou WO-A-99/64432, ou les brevets US-A-5,283,174, US-A-5,656,207, US-A-5,658,737 ou US-A-5,928,862, pour les techniques homogènes, et
- dans la demande de brevet WO-A-91/19812, ou les brevets US-A-4,889,798 ou US-A-5,998,135, pour les techniques hétérogènes.

### 7^{ème} étape - Transfert du liquide d'élution du compartiment de convergence vers l'extérieur :

L'aliquote de liquide traité 70 présent dans le compartiment de convergence 47 provient de la voie de gauche de la carte 1. Néanmoins, un autre aliquote 70, contenant ou non d'autres amplicons spécifiques dû à l'amplification, peut être également présent en provenance de la voie de droite de ladite carte 1. Dans le cas de la figure 12, les vannes fermées sont identiques mais sur les voies opposées, c'est alors filtre d'arrêt 35 de la voie de droite qui permet de stopper l'arrivée de cet aliquote dans le compartiment de convergence 47, et ainsi le mélange entre lesdits aliquotes des voies de droite et de gauche.

Les amplifications dans ces deux voies peuvent être identiques (utilisation d'amorces identiques), afin d'obtenir plus d'amplicons, ou différentes (utilisation d'amorces différentes), afin de permettre plusieurs analyses en fonction du nombre d'amplicons différents obtenus.

Il est également possible d'avoir plus de deux voies dans une carte réactionnelle 1 selon l'invention. Dans ce cas, il convient d'adapter les canaux 64 aux voisinages des vannes à bille d'entrée 6 et de sortie 9. Ainsi, il sera nécessaire d'avoir d'autres filtres d'arrêt et d'autres vannes en position inférieure afin de pouvoir faire converger tous les aliquotes dans le compartiment 47.

Lorsque la lecture au niveau de la cellule 46 prouve que l'amplification s'est bien déroulée ce qui atteste de la présence d'une cible dans l'échantillon biologique de départ, à savoir la solution à tester 69, le ou les aliquotes présents dans le compartiment de convergence 47 sont ensuite transférés vers une autre carte d'analyse ou réactionnelle, non représentée sur les figures, qui permet d'identifier et d'analyser les amplicons. Elle peut utiliser par exemple des puces à ADN mises au point par la société Affymetrix, comme cela a déjà été décrit précédemment.Ce transfert s'effectue alors par la sortie 7, selon F5, via la vanne à bille 9.

Toutefois, il est également envisageable qu'une puce biologique soit structurellement solidaire de la carte réactionnelle 1. Il est également possible que la sixième étape soit limitée au transfert dans le compartiment de convergence, sans qu'il y ait de contrôle de la réalisation ou non de l'amplification. Enfin ce transfert peut s'effectuer directement dans la puce à ADN sans passer par le compartiment de convergence.

### REFERENCES

1. Carte réactionnelle
2. Entrée du liquide de lavage 71
3. Entrée de la solution à tester 69
4. Entrée du liquide d'élution 72
5. Entrée pour la variation de pression à l'intérieur de la carte 1
6. Vanne à bille d'entrée de la carte 1
7. Sortie de la solution traitée 70 vers l'extérieur
8. Sortie des déchets
9. Vanne à bille de sortie vers l'extérieur
10. Vanne à bille de sortie des déchets
11. Première vanne
12. Deuxième vanne
13. Troisième vanne
14. Quatrième vanne
15. Cinquième vanne
16. Sixième vanne
17. Septième vanne
18. Huitième vanne
19. Neuvième vanne
20. Dixième vanne
21. Onzième vanne
22. Douzième vanne
23. Treizième vanne
24. Quatorzième vanne
25. Quinzième vanne
26. Seizième vanne
27. Dix-septième vanne
28. Dix-huitième vanne
29. Dix-neuvième vanne
30. Vingtième vanne
31. Vingt et unième vanne
32. Vingt-deuxième vanne
33. Vingt-troisième vanne
34. Vingt-quatrième vanne
35. Vingt-cinquième vanne
36. Compartiment de dosage de la solution à tester
37. Compartiment de dosage du liquide d'élution
38. Compartiment de séparation
39. Pastille de particules magnétiques
40. Compartiment de reprise des constituants structurels
41. Pastille de constituants structurels permettant l'amplification
42. Compartiment d'amplification
43. Pastille des constituants fonctionnels permettant l'amplification
44. Compartiment d'échantillonnage
45. Compartiment de détection et de lecture
45a. Pastille de détection
46. Cellule de lecture
47. Compartiment de convergence
48. Premier filtre hydrophobe
49. Deuxième filtre hydrophobe
50. Filtre d'arrêt d'un volume déterminé du liquide d'élution dans le compartiment 37
51. Filtre d'arrêt d'un volume déterminé de la solution 70 dans le compartiment 36
52. Filtre d'arrêt de la solution à tester 70 dans le compartiment 38
53. Filtre d'arrêt du premier liquide de lavage 71 dans le compartiment 38
54. Filtre d'arrêt du deuxième liquide de lavage 71 dans le compartiment 38
55. Filtre d'arrêt du liquide d'élution dans le compartiment 38
56. Filtre d'arrêt de l'échantillon avec les constituants dans le compartiment 40
57. Filtre d'arrêt de l'échantillon dans la cellule de lecture 46
58. Filtre d'arrêt de l'échantillon marqué dans le compartiment 45
59. Filtre d'arrêt de l'échantillon avec les enzymes dans le compartiment 42
60. Filtre d'arrêt de l'échantillon avec les enzymes dans le compartiment 47
61. Vanne complémentaire de la voie de droite dite vanne de purge
62. Face avant de la carte 1
63. Face arrière de la carte 1
64. Canaux débouchants au niveau de la face avant 62
65. Film transparent cloisonnant les canaux 64 au niveau de la face avant 62
66. Film transparent ou paroi cloisonnant les canaux 64 au niveau de la face arrière 63
67. Film transparent cloisonnant les vannes 11 à 35 et 61 sur la face arrière 63
68. Rebord ou tranche de la carte 1
69. Solution à tester
70. Solution traitée
71. Liquide de lavage
72. Liquide d'élution
73. Dérivation du compartiment 38 pour les filtres d'arrêt 52 à 55
74. Renfoncement ou rainure de chaque vanne 11 à 35 et 61 où est soudée le film 67
75. Moyen de compression du film 67 ou languette flexible
76. Moyen de fermeture étanche ou pion en élastomère
77. Moyen d'ouverture ou biseau
78. Lamelle en bande constituée de plusieurs languettes 75
79. Actionneur de type piston
80. Durit pour air comprimé
81. Support
82. Surface biseautée de la carte 1
83. Moyen de fixation de la lamelle 78
84. Soudure périphérique située au fond de la rainure 74
F1. Entrée du liquide de lavage 71
F2. Entrée de la solution à tester 70
F3. Entrée du liquide d'élution
F4. Entrée pour la variation de pression à l'intérieur de la carte 1
F5. Sortie de la solution à tester vers l'extérieur
F6. Sortie des déchets
F7. Entrée d'air comprimé des moyens d'actionnement 77
F8. Sortie d'air comprimé des moyens d'actionnement 77
F9. Mouvement des moyens d'actionnement 77
F10. Basculement de la languette 75

## Revendications

1. Carte réactionnelle (1) constituée d'un corps, ayant une face avant (62) et une face arrière (63) délimitées par un rebord (68), d'au moins une entrée (2, 3, 4 et/ou 5) et d'au moins une sortie (7 et/ou 8), reliées l'une (2, 3, 4 et/ou 5) à l'autre (7 et/ou 8) par un réseau de canaux (64) constituant au moins une voie réactionnelle pour au moins un fluide (70, 71 et/ou 72), le ou les fluides (70, 71 et/ou 72) étant dirigés au sein de la carte (1) par l'intermédiaire de vannes (11 à 35 et/ou 61) ; chaque vanne (11 à 35 ou 61) est constituée d'un film (67) flexible, qui peut être déformé pour permettre le passage d'un fluide ou qui coopère avec un moyen de compression (75) pour empêcher le passage du fluide, le film (67) étant fixé sur la face arrière (63) de ladite carte (1) au niveau d'un renfoncement périphérique (74) de l'ensemble des canaux concernés par la vanne (11 à 35 ou 61) ; la carte (1) comporte des canaux (64) affleurant sur au moins l'une de ses faces (62 et/ou 63), les canaux (64) étant de deux sections différentes, une petite section pour le transfert du fluide ou des fluides (70, 71 et/ou 72) et une grande section faisant office de compartiment réactionnel ; chaque face avant (62) ou arrière (63) est délimitée par au moins un film (48, 49, 65, 66 et/ou 67).

2. Carte, selon la revendication 1, **caractérisée par le fait que** le corps de la carte (1) est monobloc, et que le moyen de compression (75) est rapporté et solidaire de ladite carte (1) ou constitue une partie d'un appareil permettant la mise en oeuvre de la carte (1).

3. Carte, selon l'une quelconque des revendications 1 ou 2, **caractérisée par le fait que** le rapport entre la petite section et la grande section des canaux (64) est compris entre 1 pour 1,01 et 1 pour 10, préférentiellement entre 1 pour 1,01 et 1 pour 3.

4. Carte, selon l'une quelconque des revendications 1 à 3, **caractérisée par le fait que** les canaux (64) affleurent en tout ou partie au niveau de la face avant (62) de la carte (1) et les vannes sont présentes au niveau de la face arrière (63) de ladite carte (1).

5. Carte, selon l'une quelconque des revendications 1 à 4, **caractérisée par le fait que** la face avant (62) de la carte (1) comporte un seul film (65) au niveau de tous les canaux (64) affleurant cette face (62), et la face arrière (63) de ladite carte (1) comporte :
- au moins un film flexible (67) au niveau des vannes (11 à 35 et/ou 61),
- au moins un filtre hydrophobe (48 et/ou 49), et éventuellement
- au moins un film (66) au niveau des canaux (64) affleurant au niveau de la face arrière (63).

6. Carte, selon la revendication 5, **caractérisée par le fait que** le ou les films flexibles (67) et le ou les films (65 et/ou 66) constituent un seul et même film.

7. Carte, selon l'une quelconque des revendications 1 à 6, en forme sensiblement de parallélépipède, **caractérisée par le fait que** les canaux (64) sont, en toute ou partie, circonscrits dans la partie médiane de la carte (1), que les filtres d'arrêt (50 à 60), associés aux filtres hydrophobes (48 et 49), sont circonscrits au niveau d'au moins un des côtés de ladite carte (1), et que les vannes (11 à 35 et/ou 61) sont positionnées entre les canaux (64) et les filtres d'arrêt (50 à 60).

8. Carte, selon l'une quelconque des revendications 1 à 7, **caractérisée par le fait que** le rebord (68) comporte l'ensemble des entrées (2, 3, 4 et 5) et sorties (7 et 8) de fluides (70, 71 et 72) de la carte (1).

9. Carte, selon la revendication 8, en forme sensiblement de parallélépipède, **caractérisée par le fait que** la ou les entrées (2, 3, 4 et 5) sont présentes sur l'un des côtés constituant le rebord (68), et que la ou les sorties (7 et 8) sont présentes sur un autre côté de ce rebord (68).

10. Carte, selon la revendication 9, **caractérisée par le fait que** la ou les entrées (2, 3, 4 et 5) sont présentes sur un côté opposé au côté où sont présents la ou les sorties (7 et 8).

11. Carte, selon la revendication 10, en forme sensiblement de parallélépipède rectangle, **caractérisée par le fait que** la ou les entrées (2, 3, 4 et 5) et la ou les sorties (7 et 8) sont présentés sur les deux petits côtés constituant le rebord (68).

12. Utilisation d'une carte réactionnelle, selon l'une quelconque des revendications 1 à 11, pour tester une solution biologique (69), éventuellement traitée au préalable afin de libérer des ligands, dans laquelle on effectue les différentes étapes biologiques dans l'ordre suivant:
- introduction de la solution biologique à tester (69) dans ladite carte,
- capture des ligands,
- reprise des ligands capturés dans une solution d'élution (72),
- mélange des ligands repris avec les constituants structurels et fonctionnels permettant de traiter les ligands, et
- détection qualitative et/ou quantitative des ligands traités.

13. Utilisation, selon la revendication 12, dans laquelle les ligands sont des acides nucléiques, les constituants structurels et fonctionnels permettant de traiter les ligands sont des constituants permettant l'amplification de ces acides nucléiques et la détection qualitative et/ou quantitative des ligands traités est une détection qualitative et/ou quantitative des produits d'amplification.

14. Utilisation, selon l'une quelconque des revendications 12 ou 13, dans laquelle on effectue une dernière étape consistant à analyser ces ligands ou ces produits d'amplification, soit dans un nouvel emplacement au sein de la carte (1), soit après transmission vers un autre dispositif.

15. Utilisation, selon l'une quelconque des revendications 12 à 14, dans laquelle les ligands ou les acides nucléiques capturés sont soumis à au moins un liquide de lavage (71) préalablement à leur reprise.

16. Utilisation, selon la revendication 15, dans laquelle la capture et éventuellement le lavage sont effectués N fois successivement, N étant compris entre 1 et 10.

17. Utilisation, selon l'une quelconque des revendications 12 ou 13, dans laquelle on détecte un traitement des ligands ou une amplification des acides nucléiques préalablement à la transmission vers un compartiment de la carte (1) ou vers un autre dispositif permettant d'analyser les ligands ou les amplicons.

18. Utilisation, selon l'une quelconque des revendications 12 à 16, dans laquelle la carte (1) est utilisée après un appareil permettant de traiter une solution à tester (69), tel qu'un appareil pour lyser des cellules biologiques et libérer les ligands, tels que des acides nucléiques, et avant un appareil permettant de détecter la présence de ces ligands, tel qu'une puce à ADN.

## Claims

1. A reaction card (1) made up of a body, having a front face (62) and a back face (63) delimited by an edge (68), of at least one entry (2, 3, 4 and/or 5) and of at least one exit (7 and/or 8), connected from one (2, 3, 4 and/or 5) to the other (7 and/or 8) by a network of channels (64) making up at least one reaction pathway for at least one fluid (70, 71 and/or 72), the fluid(s) (70, 71 and/or 72) being directed within the card (1) by means of valves (11 to 35 and/or 61); each valve (11 to 35 or 61) is made up of a flexible film (67) which can be deformed in order to enable the passage of a fluid or which cooperates with a compression means (75) in order to prevent the passage of the fluid, the film (67) being fixed to the back face (63) of said card (1) at a peripheral recess (74) of all of the channels concerned by the valve (11 to 35 or 61); the card (1) comprises channels (64) appearing on at least one of its faces (62 and/or 63), the channels (64) being made up of two different sections, a small section for the transfer of the fluid(s) (70, 71 and/or 72) and a large section acting as a reaction compartment; each front face (62) or back face (63) is delimited by at least one film (48, 49, 65, 66 and/or 67).

2. The card according to Claim 1, **characterised in that** the body of the card (1) is a monobloc, and **in that** the compression means (75) is attached to and integral with said card (1) or makes up a part of an apparatus enabling the implementation of the card (1).

3. The card according to any one of Claims 1 or 2, **characterised in that** the ratio of the small section to the large section of the channels (64) is between 1 to 1.01 and 1 to 10, and preferably between 1 to 1.01 and 1 to 3.

4. The card according to any one of Claims 1 to 3, **characterised in that** the channels (64) appear wholly or partly at the front face (62) of the card (1) and the valves are present at the back face (63) of said card (1).

5. The card according to any one of Claims 1 to 4, **characterised in that** the front face (62) of the card (1) comprises a single film (65) at all of the channels (64) appearing on this face (62), and the back face (63) of said card (1) comprises:
- at least one flexible film (67) at the valves (11 to 35 and/or 61),
- at least one hydrophobic filter (48 and/or 49), and possibly
- at least one film (66) at the channels (64) appearing at the back face (63).

6. The card according to Claim 5, **characterised in that** the flexible film(s) (67) and the film(s) (65 and/or 66) make up one and the same film.

7. The card according to any one of Claims 1 to 6, in a substantially parallelepiped shape, **characterised in that** the channels (64) are wholly or partly delimited in the middle part of the card (1), **in that** the blocking filters (50 to 60) associated with the hydrophobic filters (48 and 49) are delimited on at least one of the sides of said card (1), and **in that** the valves (11 to 35 and/or 61) are positioned between the channels (64) and the blocking filters (50 to 60).

8. The card according to any one of Claims 1 to 7, **characterised in that** the edge (68) comprises all of the entries (2, 3, 4 and 5) and exits (7 and 8) for fluids (70, 71 and 72) of the card (1).

9. The card according to Claim 8, in a substantially parallelepiped shape, **characterised in that** the entry or entries (2, 3, 4 and 5) are present on one of the sides making up the edge (68) and **in that** the exit(s) (7 and 8) are present on another side of this edge (68).

10. The card according to Claim 9, **characterised in that** the entry or entries (2, 3, 4 and 5) are present on a side opposing the side where the exit(s) (7 and 8) is/are present.

11. The card according to Claim 10, in a substantially rectangular parallelepiped shape, **characterised in that** the entry or entries (2, 3, 4 and 5) and the exit(s) (7 and 8) are present on the two small sides making up the edge (68).

12. Use of a reaction card according to any one of Claims 1 to 11, for testing a biological solution (69), possibly pre-treated in order to free the ligands, in which the different biological steps are carried out in the following order:
- introducing the biological solution to be tested (69) into said card,
- capturing the ligands,
- relocating the captured ligands in an elution solution (72),
- mixing the relocated ligands with the structural and functional components enabling the treatment of the ligands, and
- qualitative and/or quantitative detection of the treated ligands.

13. Use according to Claim 12, in which the ligands are nucleic acids, the structural and functional components enabling the treatment of the ligands are components enabling the amplification of these nucleic acids and the qualitative and/or quantitative detection of the treated ligands is a qualitative and/or quantitative detection of the amplification products.

14. Use according to any one of Claims 12 or 13, in which a last step consisting in the analysis of these ligands or these amplification products is carried out either in a new location inside the card (1) or after transmission to another device.

15. Use according to any one of Claims 12 to 14, in which the ligands or the nucleic acids captured are subjected to at least one washing liquid (71) before being relocated.

16. Use according to Claim 15, in which the capturing and possibly the washing are carried out N times successively, N being between 1 and 10.

17. Use according to any one of Claims 12 or 13, in which there is detected a treatment of the ligands or an amplification of the nucleic acids before transmission to a compartment of the card (1) or to another device enabling the analysis of the ligands or the amplicons.

18. Use according to any one of Claims 12 to 16, in which the card (1) is used after an apparatus enabling the treatment of a solution to be tested (69), such as an apparatus for lysing biological cells and freeing the ligands, such as nucleic acids, and before an apparatus enabling the detection of the presence of these ligands, such as a DNA chip.

## Patentansprüche

1. Eine Testkarte (1), die aus einem Körper, der eine vordere Fläche (62) und eine hintere Fläche (63) aufweist, die durch einen Rand (68) begrenzt sind, aus mindestens einem Eingang (2, 3, 4 und/oder 5) und aus mindestens einem Ausgang (7 und/oder 8), wobei der eine (2, 3, 4 und/oder 5) mit dem anderen (7 und/oder 8) durch ein Kanalnetz (64) verbunden ist, das für mindestens ein Fluid (70, 71 und/oder 72) mindestens einen Reaktionsweg bildet, besteht, wobei das Fluid oder die Fluide (70, 71 und/oder 72) durch Ventile (11 bis 35 und/oder 61) in das Innere der Karte (1) geleitet werden; wobei jedes Ventil (11 bis 35 oder 61) aus einer biegsamen Folie (67) besteht, die verformt werden kann, um den Durchlauf eines Fluids zu ermöglichen, oder die mit einem Kompressionsmittel (75) zusammenwirkt, um den Durchlauf des Fluids zu verhindern, wobei die Folie (67) auf der hinteren Fläche (63) der Karte (1) an einer peripheren Vertiefung (74) der betreffenden Kanalanordnung des Ventils (11 bis 35 oder 61) angebracht ist; wobei die Karte (1) Kanäle (64) beinhaltet, die mit mindestens einer der Flächen (62 und/oder 63) bündig abschließen, wobei die Kanäle (64) aus zwei unterschiedlichen Abschnitten bestehen, einem kleinen Abschnitt für den Transfer des Fluids oder der Fluide (70, 71 und/oder 72) und einem großen Abschnitt, der als Reaktionsbereich dient; wobei jede vordere Fläche (62) oder hintere Fläche (63) durch mindestens eine Folie (48, 49, 65, 66 und/oder 67) begrenzt ist.

2. Karte gemäß Anspruch 1, **dadurch gekennzeichnet, dass** der Körper der Karte (1) aus einem Einzelblock besteht und dass das Kompressionsmittel (75) zu der Karte (1) zugehörig und formschlüssig mit ihr verbunden ist oder einen Teil eines Gerätes bildet, das die Anwendung der Karte (1) ermöglicht.

3. Karte gemäß einem der Ansprüche 1 oder 2, **dadurch gekennzeichnet, dass** das Verhältnis zwischen dem kleinen Abschnitt und dem großen Abschnitt der Kanäle (64) zwischen 1 bis 1,01 und 1 bis 10, vorzugsweise zwischen 1 bis 1,01 und 1 bis 3 liegt.

4. Karte gemäß einem der Ansprüche 1 bis 3, **dadurch gekennzeichnet, dass** die Kanäle (64) ganz oder zum Teil mit der vorderen Fläche (62) der Karte (1) bündig abschließen und die Ventile an der hinteren Fläche (63) der Karte (1) vorhanden sind.

5. Karte gemäß einem der Ansprüche 1 bis 4, **dadurch gekennzeichnet, dass** die vordere Fläche (62) der Karte (1) an allen Kanälen (64), die mit dieser Fläche (62) bündig abschließen, eine einzige Folie (65) beinhaltet und die hintere Fläche (63) der Karte (1) Folgendes beinhaltet:
- mindestens eine biegsame Folie (67) an den Ventilen (11 bis 35 und/oder 61),
- mindestens einen wasserabweisenden Filter (48 und/oder 49) und gegebenenfalls
- mindestens eine Folie (66) an den Kanälen (64), die mit der hinteren Fläche bündig abschließen (63).

6. Karte gemäß Anspruch 5, **dadurch gekennzeichnet, dass** die biegsame Folie oder die biegsamen Folien (67) und die Folie oder die Folien (65 und/oder 66) ein und dieselbe Folie bilden.

7. Karte gemäß einem der Ansprüche 1 bis 6, im Wesentlichen in Form eines Parallelflachs, **dadurch gekennzeichnet, dass** die Kanäle (64) ganz oder zum Teil in dem Mittelteil der Karte (1) abgegrenzt sind, dass die Sperrfilter (50 bis 60), die mit den wasserabweisenden Filtern (48 und 49) verknüpft sind, an mindestens einer der Seiten der Karte (1) abgegrenzt sind und dass die Ventile (11 bis 35 und/oder 61) zwischen den Kanälen (64) und den Sperrfiltern (50 bis 60) positioniert sind.

8. Karte gemäß einem der Ansprüche 1 bis 7, **dadurch gekennzeichnet, dass** der Rand (68) die Anordnung der Eingänge (2, 3, 4 und 5) und Ausgänge (7 und 8) von Fluiden (70, 71 und 72) der Karte (1) beinhaltet.

9. Karte gemäß Anspruch 8, im Wesentlichen in Form eines Parallelflachs, **dadurch gekennzeichnet, dass** der Eingang oder die Eingänge (2, 3, 4 und 5) auf einer der Seiten, die den Rand (68) bilden, vorhanden ist/sind, und dass der Ausgang oder die Ausgänge (7 und 8) auf einer anderen Seite dieses Rands (68) vorhanden ist/sind.

10. Karte gemäß Anspruch 9, **dadurch gekennzeichnet, dass** der Eingang oder die Eingänge (2, 3, 4 und 5) auf einer Seite vorhanden ist/sind, die der Seite, auf der der Ausgang oder die Ausgänge (7 und 8) vorhanden ist/sind, gegenüberliegt.

11. Karte gemäß Anspruch 10, im Wesentlichen in Form eines **rechtwinkligen Parallelflachs, dadurch gekennzeichnet, dass** der Eingang oder die Eingänge (2, 3, 4 und 5) und der Ausgang oder die Ausgänge (7 und 8) auf den zwei kleinen Seiten, die den Rand (68) bilden, vorhanden ist/sind.

12. Die Verwendung einer Testkarte gemäß einem der Ansprüche 1 bis 11 zum Prüfen einer biologischen Lösung (69), die gegebenenfalls vorab behandelt wurde, um Liganden freizusetzen, wobei die unterschiedlichen biologischen Schritte in der folgenden Reihenfolge durchgeführt werden:
- Einführen der zu prüfenden biologischen Lösung (69) in die Karte
- Einfangen der Liganden
- Entnehmen der eingefangenen Liganden aus einer Elutionslösung (72),
- Vermischen der entnommenen Liganden mit den strukturellen und funktionellen Komponenten, die die Behandlung der Liganden ermöglichen, und
- qualitatives und/oder quantitatives Erkennen der behandelten Liganden.

13. Verwendung gemäß Anspruch 12, wobei die Liganden Nukleinsäuren sind, die strukturellen und funktionellen Komponenten, die die Behandlung der Liganden ermöglichen, Komponenten sind, die die Amplifikation dieser Nukleinsäuren ermöglichen, und das qualitative und/oder quantitative Erkennen der behandelten Liganden ein qualitatives und/oder quantitatives Erkennen der Amplifikationsprodukte ist.

14. Verwendung gemäß einem der Ansprüche 12 oder 13, wobei ein letzter Schritt durchgeführt wird, der darin besteht, diese Liganden oder diese Amplifikationsprodukte entweder an einer neuen Stelle im Inneren der Karte (1) oder nach der Übertragung auf eine andere Vorrichtung zu analysieren.

15. Verwendung gemäß einem der Ansprüche 12 bis 14, wobei die Liganden oder die eingefangenen Nukleinsäuren vor ihrer Entnahme mindestens einer Waschflüssigkeit (71) ausgesetzt werden.

16. Verwendung gemäß Anspruch 15, wobei das Einfangen und gegebenenfalls das Waschen N-mal aufeinanderfolgend durchgeführt werden, wobei N zwischen 1 und 10 liegt.

17. Verwendung gemäß einem der Ansprüche 12 oder 13, wobei vor der Übertragung auf einen Bereich der Karte (1) oder auf eine andere Vorrichtung, der/die die Analyse der Liganden oder der Amplikone ermöglicht, eine Behandlung der Liganden oder eine Amplifikation der Nukleinsäuren erkannt wird.

18. Verwendung gemäß einem der Ansprüche 12 bis 16, wobei die Karte (1) nach einem Gerät, das die Behandlung einer zu prüfenden Lösung (69) ermöglicht, wie etwa einem Gerät zum Lysieren von biologischen Zellen und Freisetzen der Liganden, wie etwa Nukleinsäuren, und vor einem Gerät, das das Erkennen der Anwesenheit dieser Liganden ermöglicht, wie etwa einem DNA-Chip, verwendet wird.
